(19)

Europäisches
Patentamt
European
Patent Office
Office européen
des brevets

(11) **EP 4 414 059 A1**

(12) **EUROPEAN PATENT APPLICATION**
published in accordance with Art. 153(4) EPC

(43) Date of publication:
**14.08.2024  Bulletin 2024/33**

(21) Application number: **22886996.2**

(22) Date of filing: **25.10.2022**

(51) International Patent Classification (IPC):
**B01D 69/00** (2006.01)          **B01D 69/02** (2006.01)
**B01D 69/08** (2006.01)          **C08J 9/26** (2006.01)

(52) Cooperative Patent Classification (CPC):
**B01D 69/00; B01D 69/02; B01D 69/08; C08J 9/26**

(86) International application number:
**PCT/JP2022/039686**

(87) International publication number:
**WO 2023/074670 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.10.2021   JP 2021177826**

(71) Applicant: **KURARAY CO., LTD.**
**Kurashiki City, Okayama Prefecture 710 (JP)**

(72) Inventors:
• **YABUNO, Youhei**
  **1000004 Tokyo (JP)**
• **MATSUMOTO, Kazuki**
  **7138550 Okayama (JP)**
• **MIYAGAWA, Naoki**
  **7138550 Okayama (JP)**
• **MIZUMOTO, Yoshito**
  **7138550 Okayama (JP)**

(74) Representative: **Vossius & Partner**
**Patentanwälte Rechtsanwälte mbB**
**Siebertstrasse 3**
**81675 München (DE)**

(54) **POROUS MEMBRANE AND METHOD FOR MANUFACTURING POROUS MEMBRANE**

(57)      One aspect of the present invention relates to a porous membrane having a porous structure, wherein when a fractal dimension is calculated under a plurality of conditions including at least two or more conditions, the fractal dimension being to be calculated from image data obtained by photographing a porous structure on a cut section formed by cutting the porous membrane on a discretionary section in which at least the porous structure is observed, at a discretionary photographing position and a discretionary photographing magnification at which at least the porous structure of the membrane section is observed, all of the fractal dimensions calculated under each of the plurality of conditions are 1.5 or more and 1.9 or less.

FIG.1

300x  33.3 μm  WD : 11.5mm  10kV

EP 4 414 059 A1

**Description**

**Technical Field**

The present invention relates to a porous membrane and a method for manufacturing a porous membrane.

**Background Art**

A separation technique using a hollow fiber membrane has such advantages as downsizing of a device, and thus is widely used in various fields, for example, water treatment fields such as water purification, drinking water production, industrial water production, and wastewater treatment, food industry fields, and pharmaceutical product production fields.

Hollow fiber membranes to be used in such a separation technique are naturally superior in water permeability and separation performance (nominal pore size), and are required to be superior in balance between mechanical strength and elongation.

Specifically, hollow fiber membrane modules to be used for water treatment are commonly subjected to physical washing constituted by bubbling, backwashing, and the like once every about 30 minutes. The physical washing applies physical vibration and energy to hollow fiber membranes, and this may lead to breakage, leakage, and the like of the hollow fiber membranes.

In particular, in recent years, hollow fiber membrane modules to be subjected to stronger physical washing have been developed. For example, Patent Literature 1 discloses a one-end-free type hollow fiber membrane module in which an upper gas supply portion and a lower gas supply portion are provided in a gas supply portion, and hollow fiber membranes are cleaned using these gas supply portions. In the case of a hollow fiber membrane module in which strong washing is performed as described above, porous membranes further superior in water permeability and also further superior in balance between mechanical strength and elongation than those of existing products are demanded.

In view of such a background, for example, Patent Literature 2 discloses a hollow fiber membrane which has high water permeability and high chemical resistance and with which chemicals can be used without deterioration in membrane strength.

In addition, Patent Literature 3 discloses a porous hollow fiber membrane having high strength and being superior in water permeation performance, and a method for manufacturing the porous hollow fiber membrane, and it is pointed out from the membrane structure aspect that the membrane has a three-dimensional network structure and the thickness of the backbone is in a certain range.

However, Patent Literature 2 does not clearly disclose about constituent elements from the membrane structure aspect necessary for exhibiting superior strength and water permeability, and the balance among water permeability, strength, and elongation of the porous hollow fiber membrane is insufficient for a module employing strong physical washing as described in Patent Literature 1. In addition, the porous hollow fiber membrane described in Patent Literature 3 also has an insufficient balance among water permeability, strength, and elongation for a module employing strong physical washing as described in Patent Literature 1. Furthermore, a membrane structure necessary for obtaining superior strength is defined by ambiguous parameters such as a three-dimensional network structure and the thickness of the backbone, and elements necessary in the membrane structure aspect superior in balance among water permeability, strength, and elongation have not been appropriately discussed.

The present invention has been made in view of such circumstances, and an object thereof is to provide a porous membrane superior in balance among water permeability, strength, and elongation. Another object of the present invention is to provide a method for manufacturing a porous membrane for producing a porous membrane superior in balance among water permeability, strength, and elongation.

**Citation List**

**Patent Literature**

Patent Literature 1: JP 6757739 B2
Patent Literature 2: WO 2007/119850 A
Patent Literature 3: JP 6824284 B2

**Summary of Invention**

As a result of various studies, the present inventors have found that the above objects are achieved by the present invention described below.

That is, a porous membrane according to one aspect of the present invention is a porous membrane having a porous structure, in which when a fractal dimension is calculated under a plurality of conditions including at least two or more conditions, the fractal dimension being to be calculated from image data obtained by photographing a porous structure on a cut section formed by cutting the porous membrane on a discretionary section in which at least the porous structure is observed, at a discretionary photographing position and a discretionary photographing magnification at which at least the porous structure of the membrane section is observed, all of the fractal dimensions calculated under each of the plurality of conditions are 1.5 or more and 1.9 or less.

**Brief Description of Drawings**

FIG. 1 is a view showing a scanning electron micrograph of a section of the porous hollow fiber membrane according to Example 1.

FIGS. 2A to 2F show, in the left diagrams, views showing scanning electron micrographs each obtained by enlarging a part of a section of the porous hollow fiber membrane according to Example 1, and in the right diagrams, graphs showing calculation results of a fractal dimension D corresponding to the left diagrams of FIGS. 2A to 2F, respectively.

FIG. 3 is a view showing a scanning electron micrograph of a section of the porous hollow fiber membrane according to Example 2.

FIGS. 4A to 4F show, in the left diagrams, views showing scanning electron micrographs each obtained by enlarging a part of a section of the porous hollow fiber membrane according to Example 2, and in the right diagrams, graphs showing calculation results of a fractal dimension D corresponding to the left diagrams of FIGS. 4A to 4F, respectively.

FIG. 5 is a view showing a scanning electron micrograph of a section of the porous hollow fiber membrane according to Comparative Example 1.

FIGS. 6A to 6F show, in the left diagrams, views showing scanning electron micrographs each obtained by enlarging a part of a section of the porous hollow fiber membrane according to Comparative Example 1, and in the right diagrams, graphs showing calculation results of a fractal dimension D corresponding to the left diagrams of FIGS. 2A to 2F, respectively.

FIG. 7 is a view showing a scanning electron micrograph of a section of the porous hollow fiber membrane according to Example 3.

FIGS. 8A to 8F show, in the left diagrams, views showing scanning electron micrographs each obtained by enlarging a part of a section of the porous hollow fiber membrane according to Example 3, and in the right diagrams, graphs showing calculation results of a fractal dimension D corresponding to the left diagrams of FIGS. 8A to 8F, respectively.

FIG. 9 is a view showing a scanning electron micrograph of a section of the porous hollow fiber membrane according to Example 4.

FIGS. 10A to 10F show, in the left diagrams, views showing scanning electron micrographs each obtained by enlarging a part of a section of the porous hollow fiber membrane according to Example 4, and in the right diagrams, graphs showing calculation results of a fractal dimension D corresponding to the left diagrams of FIGS. 10A to 10F, respectively.

FIG. 11 is a view showing a scanning electron micrograph of a section of the porous hollow fiber membrane according to Comparative Example 2.

FIGS. 12A to 12F show, in the left diagrams, views showing scanning electron micrographs each obtained by enlarging a part of a section of the porous hollow fiber membrane according to Comparative Example 2, and in the right diagrams, graphs showing calculation results of a fractal dimension D corresponding to the left diagrams of FIGS. 12A to 12F, respectively.

**Description of Embodiments**

Hereinafter, an embodiment of the present invention will be described, but the present invention is not limited thereto. Unless otherwise specified in the present description, "A to B" expressing a numerical range means "A or more and B or less".

<Porous Membrane>

In the present embodiment, a porous membrane refers to a porous membrane having a porous structure that is a membrane having a large number of pores inside and outside the membrane.

A porous membrane according to one embodiment of the present invention is a porous membrane having a porous structure, in which when a fractal dimension is calculated under a plurality of conditions including at least two or more conditions, the fractal dimension being to be calculated from image data obtained by photographing a porous structure on a cut section formed by cutting the porous membrane on a discretionary section in which at least the porous structure is observed, at a discretionary photographing position and a discretionary photographing magnification at which at least the porous structure of the membrane section is observed, all of the fractal dimensions calculated under each of the plurality of conditions are 1.5 or more and 1.9 or less. If so, a porous membrane superior in balance among water permeability, strength, and elongation is obtained.

Next, the fractal dimension will be described.

As described in Patent Literature 2 and 3, it has been considered that a porous membrane superior in balance among water permeability, strength, and elongation has a three-dimensional network structure. As the porous structure, a spherulite structure, a closed pore structure, a macrovoid structure, and so on are known in addition to the three-dimensional network structure, but the transition between the three-dimensional network structure and the other respective structures are not clearly bordered, and are generated via continuous transition. For example, the border between the three-dimensional network structure and the spherulite structure is unclear, and there is a three-dimensional network structure that is about to be a spherulite structure. Therefore, there is a problem that when a structure is expressed by words, the structure cannot be defined as a numerical value and ambiguity is left. In addition, when a porous membrane is molded, a structural transition occurs also in the thickness direction of a section in the principle of manufacturing the membrane by a phase separation method, and thus there is ambiguity in that it is difficult to unambiguously discuss the entire membrane structure.

The present inventors have paid attention to the continuous state transition of the porous structure, and considered utilizing a fractal dimension as an index expressing the continuous transition of the porous structure of the porous membrane. A fractal dimension is a statistical index indicating how completely a certain fractal fills a space as a fractal is expanded to a finer scale in the fractal geometry. Complex structures in nature, including porous structures, have not been quantitatively analyzed due to their complexity. However, such complex shapes have self-similarity in terms of their circumferential length, surface area, and the like. For example, if the measurement unit (scale of measurement) is made smaller, the measured value itself becomes larger, and if a part is enlarged, a structure statistically similar to the original is obtained. This self-similarity is often not established on an infinite scale, and even in the present porous structure, there is a problem of resolution of a scanning electron microscope (SEM). Therefore, it is considered that self-similarity is not established when the magnification is extended to infinity. However, since self-similarity is approximately established in a certain range (magnification), it is called statistical self-similarity, and this can be expressed as a fractal dimension.

In the present embodiment, the analysis of the fractal dimension is not particularly limited as long as a fractal dimension can be calculated. For example, there are various methods of calculating the fractal dimension such as a divider method, a scale conversion method, a cover method, and a box counting method, and specifically, the fractal dimension can be evaluated by the box counting method from image data (two-dimensional) obtained by photographing on a cut section formed by cutting the porous membrane on a discretionary section in which at least the porous structure is observed, at a discretionary photographing position and a discretionary photographing magnification at which at least the porous structure of the membrane section is observed.

More specifically, the fractal dimension of the porous structure of the porous membrane according to the present embodiment can be calculated, for example, by the following method. First, the porous structure is photographed using a scanning electron microscope (SEM) (JSM-IT200 manufactured by JEOL Ltd.) on a cut section formed by cutting the porous membrane on a discretionary section in which at least the porous structure is observed, at a discretionary photographing position and a discretionary photographing magnification at which at least the porous structure of the membrane section is observed. The fractal dimension can be calculated by performing image processing on the photographed porous structure image using Image J, which is open source image processing software.

The discretionary photographing position is not particularly limited as long as it is a position where at least the porous structure of a membrane section is observed on a cut section formed by cutting the porous membrane on a discretionary section in which at least the porous structure is observed. Specifically, for example, in a case where the porous membrane is in the form of a hollow fiber, a cut section, such as that at the outer periphery, that at the central portion, or that at the inner periphery, can be photographed.

The discretionary photographing magnification is not particularly limited as long as it is a magnification at which at least the porous structure of the porous membrane is observed at the discretionary photographing position, at which self-similarity is established, and at which the fractal property is not broken. Specifically, for example, the photographing is preferably performed using an SEM at 300 to 20000 magnifications.

As a procedure of the image processing, specifically, the porous structure image is binarized to distinguish a solid portion (resin portion) and a void portion constituting a porous structure in one division, and a fractal dimension can be calculated for the binarized image using a Box Counting function of Image J. The analysis of a fractal dimension by the box counting method is a known method, and other analysis software or programs having the same function may be used for the analysis of the fractal dimension as long as the reproducibility of the analysis result can be obtained.

The principle of the box counting method to be used to calculate the fractal dimension is as follows.

(1) The binarized porous structure image is covered with a lattice. (More specifically, a lattice can be formed by varying the pixel size.)
(2) The number of the lattice boxes in which a resin portion of the porous structure is present is counted.
(3) The number of the lattice boxes is counted in the same manner while changing the size of the lattice.
(4) The size of the lattice and the number of the counted lattice boxes are plotted on a double logarithmic graph, and the slope (D) of the straight line calculated by the least square method is defined as a fractal dimension.

With respect to a mathematical expression, the fractal dimension is expressed by the following formula (1) where D denotes the fractal dimension, $\delta$ denotes the size of the lattice, and $N(\delta)$ denotes the number of the lattice boxes in which the resin portion of the porous structure is present when the lattice size is $\delta$. When both logarithms of $N(\delta)$ and $\delta$ are plotted while $\delta$ is changed, if the image has fractal geometry, the plots are on a straight line, and the slope of the straight line can be expressed as D.

[Math. 1]

$$D = -\lim_{\delta \to 0} \frac{\log N(\delta)}{\log \delta} \qquad (1)$$

The fractal dimension is an index quantitatively indicating the complexity of the porous structure, and specifically, as the numerical value is closer to 2, the porous structure is denser and has a more complicated structure, and it is conceivable that the porous structure becomes a more complicated flow path when water flows. On the other hand, as the numerical value is closer to 1, the more sparse and the less complicated and simpler the structure is, and it is conceivable that the structure does not become a complicated flow path.

In the present embodiment, in order to obtain a porous membrane superior in balance among water permeability, strength, and elongation, it is important that the fractal dimension in the sectional direction of the porous membrane obtained as described above is 1.5 or more and 1.9 or less. When the fractal dimension is within the above range, it can be stated that the porous structure of the porous membrane has fractal geometry.

In order to obtain water permeability, it is important that the porous structure is as sparse as possible, there are many void spaces, and the porous structure is a simple flow path that does not tangle complicatedly. That is, it is important that the fractal dimension is relatively small. When the fractal dimension is larger than 1.9, it is suggested that the porous structure is dense and is a complicated flow path, and sufficient water permeability cannot be obtained. On the other hand, regarding strength and elongation, it is preferable that the porous structure is a dense and complicatedly intricate structure. When the fractal dimension is smaller than 1.5, it is suggested that the porous structure is sparse and the porous structure has a simple structure, and sufficient strength and elongation cannot be maintained.

The fractal dimension is preferably 1.7 or more and 1.9 or less, and more preferably 1.8 or more and 1.9 or less.

In the present embodiment, the porous structure is photographed under a plurality of conditions including at least two or more conditions at a discretionary photographing position and a discretionary photographing magnification, and a fractal dimension is calculated from each of the image data photographed under the plurality of conditions. When the porous structure is photographed under a plurality of conditions including two or more conditions and the fractal dimension is calculated for each condition, not only reproducibility can be confirmed, but also a change in the complexity of the structure of the entire membrane can be evaluated.

When the combinations of the photographing position and the photographing magnification are different, the conditions for photographing the porous structure are considered to be different. For example, in a case where the porous membrane is in a hollow fiber form, and a plurality of conditions for photographing image data for calculating a fractal dimension are two conditions, a discretionary photographing position and a discretionary photographing magnification are exemplified by (condition 1: outer periphery, 5000 magnifications; condition 2: outer periphery, 10000 magnifications), (condition 1: outer periphery, 5000 magnifications; condition 2: inner periphery, 5000 magnifications), and (condition 1: outer periphery, 5000 magnifications; condition 2: inner periphery, 10000 magnifications).

That is, the two conditions may be two conditions in which the photographing position is the same and the photographing magnification is different, or alternatively, the two conditions may be two conditions in which the photographing position is different but the photographing magnification is the same, or further alternatively, the two conditions may be two conditions in which both the photographing position and the photographing magnification are different.

In the present embodiment, it is just required that the porous structure be photographed under at least two conditions and the fractal dimension of each piece of the photographed image data is calculated. More preferably, the fractal dimension is calculated from each piece of the image data photographed under four or more conditions, and still more preferably, the fractal dimension is calculated from each piece of the image data photographed under six or more conditions.

In addition, it is important that all of the fractal dimensions calculated under each of the plurality of conditions including at least two or more conditions in this manner is 1.5 or more and 1.9 or less. When all of the fractal dimensions calculated under each of the plurality of conditions including two or more conditions is 1.9 or less, sufficient water permeability can be obtained. In addition, when all of the fractal dimensions calculated under each of the plurality of conditions including two or more conditions is 1.5 or less, sufficient strength and elongation can be obtained.

This is because when the fractal dimension (the degree of the density of the resin portion and the degree of the complexity of the flow path) is almost the same along the sectional direction of the porous structure of the porous membrane, it is possible to surely obtain a target porous membrane superior in balance of water permeability, strength, and elongation. Preferably, the porous structure of the porous membrane preferably have the same fractal dimension throughout along the sectional direction.

In addition, when the fractal dimension is calculated from image data obtained by photographing under a plurality of conditions including at least two or more conditions, a difference between a maximum value and a minimum value of the fractal dimensions calculated under each of the plurality of conditions is preferably 0.1 or less. If so, a porous membrane superior in balance among water permeability, strength, and elongation can be more surely obtained.

This is considered to be because it is preferable that the fractal dimensions calculated under each of the plurality of conditions are at the same level. The fact that the fractal dimensions calculated under each of the plurality of conditions vary indicates that the degree of the density of the porous membrane and the degree of the complexity of the flow path change at any point in the section. Basically, when the phase separation process is the same, the phase separation phenomenon is considered to be a phenomenon having fractal geometry, and thus the fractal dimension falls within a certain range regardless of the degree of the progress of phase separation. However, when the phase separation process changes even slightly, the density of the separation structure at this place or the complexity of the flow path changes, so that the process change can be detected by the fractal dimension. That is, when the change in fractal dimension is 0.1 or less, this means that the phase separation process is not significantly changed in the same porous membrane. Therefore, when the change in fractal dimension is 0.1 or less, since the phase separation process is not significantly changed in the process of forming the porous membrane, water easily flows, and deterioration in strength and elongation starting with a partial change in the phase structure hardly occurs.

The difference between the maximum value and the minimum value of the fractal dimension is more preferably 0.001 or more and 0.09 or less, and still more preferably 0.01 or more and 0.07 or less.

In addition, when the fractal dimension is calculated under a plurality of conditions including at least six or more conditions, a CV value (coefficient of variation) of the fractal dimension is preferably 0.1% or more and 2.0% or less. If so, a porous membrane superior in balance among water permeability, strength, and elongation can be more surely obtained.

This is considered to be because it is preferable that the fractal dimensions calculated under each of the plurality of conditions are at the same level. In the case of a porous structure having a sparse portion and a dense portion, the sparse portion stretches when pulled, but the dense portion does not stretch, so that rupture and cracking are likely to occur, that is, uniform durability can be obtained when the density, the sparseness, and the complexity of the flow path hardly vary in the sectional direction. Therefore, when photographing is performed under a plurality of conditions in the sectional direction and the CV value of the fractal dimension is 2.0% or less, the density, the sparseness, and the complexity of the flow path hardly vary in the sectional direction, and a porous membrane having superior balance among water permeability, strength, and elongation can be more surely obtained. On the other hand, it is difficult to make the CV value smaller than 0.1% due to the measurement error of the fractal dimension analysis technique.

The CV value (coefficient of variation) of the fractal dimension is more preferably 0.1% or more and 1.8% or less, and still more preferably 0.1% or more and 1.5% or less.

The porous membrane according to the present embodiment preferably contains a thermoplastic resin. If so, a porous membrane superior in balance among water permeability, strength, and elongation can be more surely obtained. The content of the thermoplastic resin contained in the porous membrane is preferably 10 to 100% by mass, and more preferably 30 to 100% by mass based on the entire porous membrane.

The thermoplastic resin is not particularly limited as long as it is a resin capable of constituting the porous membrane, and examples thereof include acrylic resins, polyacrylonitrile, polystyrene, polyamide, polyacetal, polycarbonate, polyphenylene ether, polyphenylene sulfide, polyethylene terephthalate, polytetrafluoroethylene, polyvinylidene fluoride (PVDF), polyetherimide, polyamideimide, polychloroethylene, polyethylene, polypropylene, nylon, crystalline cellulose, polysulfone (PSF), polyphenylsulfone, polyethersulfone, ABS (acrylonitrilebutadiene-styrene) resins, AS (acrylonitrile-styrene) resins, and polymers and mixtures thereof.

Among them, a vinylidene fluoride-based resin such as polytetrafluoroethylene, polyvinylidene fluoride, or a copolymer thereof are more preferable from the viewpoint of being superior in durability against chemicals and strength. In particular, when a porous membrane is manufactured on the basis of a nonsolvent induced phase separation method, the vinylidene fluoride-based resin or polysulfone recited as examples above is more preferable. As the thermoplastic resin, the resins recited as examples above may be used singly, or two or more thereof may be used in combination.

The vinylidene fluoride-based resin is not particularly limited as long as it is a vinylidene fluoride-based resin capable of constituting a porous membrane. Examples of the vinylidene fluoride-based resin specifically include a homopolymer of vinylidene fluoride and a vinylidene fluoride copolymer. The vinylidene fluoride copolymer is not particularly limited as long as it is a copolymer having a repeating unit derived from vinylidene fluoride in the molecule. Examples of the vinylidene fluoride copolymer specifically include a copolymer of vinylidene fluoride with at least one monomer selected from the group consisting of vinyl fluoride, ethylene tetrafluoride, propylene hexafluoride, and ethylene trifluoride chloride. Among the above examples, polyvinylidene fluoride, which is a homopolymer of vinylidene fluoride, is preferable as the vinylidene fluoride-based resin. As the vinylidene fluoride-based resin, the resins recited as examples above may be used singly, or two or more thereof may be used in combination.

The porous membrane may contain another component in addition to the thermoplastic resin. Examples of the other component include a thermosetting resin and a surfactant for hydrophilization treatment.

The structure of the porous membrane according to the present embodiment is not particularly limited, but a three-dimensional network structure is preferable. When the porous membrane has a three-dimensional network structure, the porous membrane has good interconnectivity between pores adjacent to each other, so that resistance generated when water passes through the porous membrane is small, high water permeation performance can be exhibited, and the porous membrane is further superior in balance among water permeability, strength, and elongation.

The porosity, which is the volume ratio of the space in the porous membrane according to the present embodiment, is not particularly limited, but is preferably 50 to 90%, and more preferably 55 to 90%. When the porosity is 55% or more, a sufficient pure water permeation speed can be obtained. When the porosity is 90% or less, sufficient strength of the membrane is obtained, the porous membrane is less prone to be the occurrence of rupture or folding during membrane filtration, and the durability as a membrane is good.

The porosity was calculated on the basis of the following formula (2) using the mass of the porous membrane in a wet state and the mass of the porous membrane in a dry state. The mass of the porous membrane in a wet state is the mass of the porous membrane brought into a wet state by immersing the porous membrane in a 50 wt% aqueous EtOH solution for 5 minutes and then passing pure water for 10 minutes. The mass in a dry state is the mass when the porous membrane is completely dried up.

$$\text{Porosity (\%)} = ((\text{mass in wet state(g)}) - (\text{mass in dry state(g)}))/(\text{mass in wet state(g)}) \times 100 \qquad (2)$$

The nominal pore size of the porous membrane according to the present embodiment is not particularly limited. The porous membrane can be used for a desired membrane such as a microfiltration membrane or an ultrafiltration membrane, and a desired nominal pore size can be freely selected because a required nominal pore size varies depending on intended use.

The form of the porous membrane according to the present embodiment is not particularly limited. The form of the porous membrane may be, for example, a flat membrane form or may be a hollow fiber form. Among them, the hollow fiber form is preferable from the viewpoint that the membrane area can be increased and the treatment capacity can be enhanced.

When the porous membrane is a hollow fiber membrane, the inner diameter of the hollow fiber membrane is preferably within a range of 200 to 2500 $\mu$m, more preferably 200 to 2000 $\mu$m, and still more preferably 300 to 2000 $\mu$m. When the inner diameter of the hollow fiber membrane is 200 $\mu$m or more, the resistance (pressure loss in tubes) of the permeated liquid is not excessively large, and the liquid flows well. When the inner diameter is 2500 $\mu$m or less, deformation such as collapse and distortion of the porous membrane hardly occurs.

The outer diameter of the hollow fiber membrane is preferably in a range of 300 to 3000 $\mu$m, more preferably 300 to 2500 $\mu$m, and still more preferably 500 to 2500 $\mu$m. When the outer diameter of the hollow fiber membrane is 300 $\mu$m or more, sufficient strength as a hollow fiber membrane can be maintained. When the outer diameter is 3000 $\mu$m or less, it is easy to secure the membrane area of the hollow fiber membrane.

The thickness of the porous membrane according to the present embodiment is not particularly limited, but is preferably 50 $\mu$m or more and 1000 $\mu$m or less, more preferably within a range of 50 to 700 $\mu$m, and still more preferably within a range of 50 to 500 $\mu$m. When the thickness of the porous membrane is 50 $\mu$m or more, sufficient strength is obtained, and deformation such as distortion hardly occurs. When the thickness is 1000 $\mu$m or less, macrovoids are less likely to occur, and a suitable membrane structure can be obtained.

(Pure Water Permeation Speed)

The porous membrane according to the present embodiment preferably has a water permeation amount (pure water permeation speed) of 200 to 100,000 L/m$^2$/hr at a transmembrane pressure difference of 0.1 MPa and 25°C. When the pure water permeation speed is within the above range, the porous membrane is superior in water permeation performance. The pure water permeation speed is more preferably 200 to 50,000 L/m$^2$/hr, and still more preferably 250 to 30,000 L/m$^2$/hr.

For example, when the porous membrane is a hollow fiber membrane, the pure water permeation speed can be determined as follows. First, the hollow fiber membrane to be measured is subjected to a wetting treatment that involves immersing the hollow fiber membrane in a 50% by mass aqueous ethanol solution for 15 minutes, and subsequently washing the hollow fiber membrane with pure water for 15 minutes. Using a porous hollow fiber membrane module having an effective length of 20 cm in which one end of the hollow fiber membrane subjected to the wetting treatment is sealed, pure water is used as raw water, and external pressure filtration is performed under the conditions of a filtration pressure of 0.1 MPa and a temperature of 25°C and the water permeation amount per hour is measured. The water permeation amount measured is converted into the water permeation amount per unit membrane area, unit time, and unit pressure and thus a water permeation amount (L/m$^2$/hr: LMH) at a transmembrane pressure difference of 0.1 MPa can be obtained.

(Tensile Strength at Break)

The porous membrane according to the present embodiment is superior in balance among water permeability, strength, and elongation, and can be widely utilized as a separation membrane. Specifically, a separation technique using a porous membrane is suitably used in the water treatment field, the gas separation field, and the like. In the water treatment field, for example, for the purpose of purified ultrapure water production, wastewater recovery, sea water desalination, and so on, the porous membrane is suitably used in a separation technique using a porous membrane. In addition, in the field of gas separation, a separation technique using a porous membrane is suitably used for the purpose of purification of air, separation of water vapor and carbon dioxide from air, separation and removal of harmful components from exhaust gas, and so on. Specifically, the separation technique using a porous membrane is suitably used for a membrane filtration method using a porous membrane, and the like.

Regarding the strength of the porous membrane, a preferable range of the strength varies depending on the field of use, and for example, when the porous membrane is used in a field with a large load on a membrane, such as wastewater recovery and concentration operation, the tensile strength at break of the porous membrane is specifically preferably 8 N/mm$^2$ or more and 15 N/mm$^2$ or less. The tensile strength at break is more preferably 8 N/mm$^2$ or more and 14 N/mm$^2$ or less, and still more preferably 8 N/mm$^2$ or more and 13 N/mm$^2$ or less. When the tensile strength at break is less than 8 N/mm$^2$, the strength is not practically sufficient in a field with a large load, and rupture or folding of the porous membrane occurs during use, resulting in poor durability as a membrane. In addition, it is technically difficult to manufacture a porous membrane having a strength higher than 15 N/mm$^2$.

On the other hand, when the porous membrane is used in a field with a small load on a membrane, such as water purification and medical water, specifically, the tensile strength at break of the porous membrane is preferably 3.2 N/mm$^2$ or more and 6.5 N/mm$^2$ or less. The tensile strength at break is more preferably 3.3 N/mm$^2$ or more and 6.5 N/mm$^2$ or less, and still more preferably 3.5 N/mm$^2$ or more and 6.5 N/mm$^2$ or less. When the tensile strength at break is less than 3.2 N/mm$^2$, the strength is not practically sufficient even in a field with a small load, and rupture or folding of the porous membrane occurs during use, resulting in poor durability as a membrane. In addition, it is technically difficult to manufacture a porous membrane that is suitable for a field with a small load and has a strength higher than 6.5 N/mm$^2$.

The tensile strength at break represents, for example, elongation of a porous membrane when the porous membrane cut into a prescribed size is pulled at a prescribed speed and the porous membrane is broken. The tensile strength at break can be measured by, for example, a tensile test using a tensile tester (Autograph AG-Xplus manufactured by Shimadzu Corporation). Specifically, in water at about 25°C, a test piece is attached to a tensile tester at a distance between chucks of 50 mm, and pulled at a speed of about 100 mm/minute, and the load at the time when the test piece breaks is measured, whereby the tensile strength at break can be measured.

(Tensile Elongation at Break)

The tensile elongation at break of the porous membrane according to the present embodiment is not particularly limited, but is preferably in a range of 20 to 400%, more preferably 20 to 300%, and still more preferably 20 to 250%. When the tensile elongation at break is 20% or more, the porous membrane can be practically sufficiently used, and sufficient durability as a membrane can be obtained. In addition, although there is no problem even if the porous membrane is stretched by more than 400%, the porous membrane is often used while being put in a container, and the porous membrane actually is not stretched by more than 400%, and therefore further elongation is unnecessary.

The tensile elongation at break can be measured by, for example, a method similar to that for the tensile strength at break described above. That is, under the same conditions as those in the measurement of the tensile strength at break, a test piece is attached to a tensile tester and pulled at a tensile speed of about 100 mm/min, displacement at the time when the test piece breaks is measured, and the tensile elongation at break can be calculated using the following formula (3).

Elongation (%)=(distance between chucks at break-distantce between chucks at measurement start)/ distance between chucks at measurement start×100

(3)

<Method for Manufacturing Porous Membrane>

The method for manufacturing the porous membrane according to the present embodiment is not particularly limited as long as the above-described porous membrane can be produced. Examples of the manufacturing method include a thermally induced phase separation method (TIPS method) and a nonsolvent induced phase separation method (NIPS method).

More specifically, one example of a method for manufacturing a porous membrane that satisfies the above-described regulation on a fractal dimension, is suitably used in a field with a large load on a membrane, such as wastewater recovery and concentration operations, and has a tensile strength at break of 8 to 15 N/mm$^2$ is a manufacturing method on the basis of the following TIPS method. One example of this manufacturing method is a method including a preparation step of preparing a membrane-forming stock solution containing a thermoplastic resin, a filler, a solvent, and a phase separation accelerator; an extrusion step of extruding the membrane-forming stock solution at a temperature higher than a phase separation onset temperature at which phase separation of the membrane-forming stock solution starts due to a temperature change; and a formation step of forming a porous membrane on the basis of a thermally induced phase separation method in which the extruded membrane-forming stock solution is brought into contact with a coagulating liquid having a temperature lower than the phase separation onset temperature of the membrane-forming stock solution, in which an HSP distance between the thermoplastic resin and a mixture of the solvent and the phase separation accelerator in the membrane-forming stock solution is adjusted to 3.75 or more and 6.50 or less, and a temperature difference between the temperature of the membrane-forming stock solution in the extrusion step and the temperature of the coagulating liquid in the formation step is adjusted to 55°C or more and 100°C or less.

In addition, one example of a method for manufacturing a porous membrane that satisfies the above-described regulation on a fractal dimension, is suitably used in a field with a small load on a membrane, such as water purification treatment and medical water, and has a tensile strength at break of 3.2 to 6.5 N/mm$^2$ is a manufacturing method on the basis of the following NIPS method. One example of this manufacturing method is a method including a preparation step of preparing a membrane-forming stock solution containing a thermoplastic resin, a solvent, and a phase separation accelerator; an extrusion step of extruding the membrane-forming stock solution; and a formation step of forming a porous membrane on the basis of a nonsolvent induced phase separation method by bringing the membrane-forming stock solution extruded into contact with a coagulating liquid containing at least a nonsolvent, in which an HSP distance between the thermoplastic resin and a mixture of the solvent and the phase separation accelerator in the membrane-forming stock solution is adjusted to 4.85 or more and 7.50 or less, and an HSP distance between the membrane-forming stock solution and the coagulating liquid is adjusted to 30 or more and 34.2 or less.

Hereinafter, a method for manufacturing the porous membrane described above will be described more specifically, but the present invention is not limited thereto.

[TIPS Method]

The TIPS method is a method for causing a phase separation phenomenon due to a temperature change. More in detail, the method for manufacturing the porous membrane according to the present embodiment on the basis of the TIPS method is, for example, a method that involves: preparing a membrane-forming stock solution containing at least four components having different functions, namely a thermoplastic resin, a filler, a solvent, and a phase separation accelerator; extruding the membrane-forming stock solution in a homogeneous state at a temperature higher than a phase separation onset temperature at which phase separation of the membrane-forming stock solution is started due to a temperature change; bringing the membrane-forming stock solution into contact with a coagulating liquid at a temperature lower than the phase separation onset temperature; and coagulating the membrane-forming stock solution to form a porous membrane.

(Preparation Step)

For the manufacture of the porous membrane according to the present embodiment, first, a membrane-forming stock solution containing at least four components having different functions, namely a thermoplastic resin, a filler, a solvent, and a phase separation accelerator is prepared.

As the thermoplastic resin, the thermoplastic resins recited as examples of the thermoplastic resin contained in the porous membrane can be used. If so, a porous membrane superior in balance among water permeability, strength, and elongation can be obtained.

The filler is used for adjusting the viscosity, and is preferably fine particles which are easily extracted by chemicals or the like and have a relatively narrow particle size distribution. Examples thereof include silica, calcium silicate, aluminum silicate, magnesium silicate, calcium carbonate, magnesium carbonate, calcium phosphate, oxides or hydroxides of metals such as iron and zinc, and salts of sodium, potassium, calcium, and so on. In particular, an inorganic filler having cohesiveness is suitable for manufacturing a porous membrane having a larger pore size because adding the inorganic filler to a composition in which a thermoplastic resin and a solvent usually tend to be phase-separated improves the solution stability of the thermoplastic resin and the solvent. From the viewpoint of such cohesiveness, silica is suitable as the inorganic filler among the above particles, and the silica may be any of hydrophilic silica, hydrophobic silica, spherical silica, and amorphous silica. As the filler, the compounds recited above as examples may be used singly or two or more thereof may be used in combination.

The solvent is preferably a poor solvent, but is not limited thereto, and a good solvent or a solvent obtained by mixing a poor solvent and a good solvent may be used from the viewpoint of the phase separation behavior of the thermoplastic resin. In addition, the solvent may contain a nonsolvent.

Examples of the solvent include γ-butyrolactone, ε-caprolactone, ε-caprolactam, dimethylformamide, dimethylsulfoxide, dimethylacetamide, N-methylpyrrolidone, phthalic acid esters such as dimethyl phthalate, diethyl phthalate, dibutyl phthalate, dicyclohexyl phthalate, diheptyl phthalate, dioctyl phthalate, and di(2-ethylhexyl) phthalate; benzoic acid esters such as methyl benzoate and ethyl benzoate; phosphoric acid esters such as triphenyl phosphate, tributyl phosphate, and tricresyl phosphate; ketones such as γ-butyrolactone, ethylene carbonate, propylene carbonate, cyclohexanone, acetophenone, and isophorone. Among them, a water-soluble solvent is preferable, and when a water-soluble solvent is used, water can be used when the solvent is extracted from the porous membrane after membrane formation. The extracted solvent can be disposed of by biological treatment or the like. For the manufacture of the porous hollow fiber membrane of the present invention, γ-butyrolactone is preferable among the solvents recited above from the viewpoint of environmental load, safety, and cost. As the solvent, the compounds recited above as examples may be used singly or two or more thereof may be used in combination.

Examples of the phase separation accelerator include polyhydric alcohols such as ethylene glycol, propylene glycol, triethylene glycol, tetraethylene glycol, polyethylene glycol, and glycerin; polyglycerin fatty acid esters such as decaglyceryl monolaurate; polyoxyethylene glycerin fatty acid esters such as polyoxyethylene glycerin monostearate; polyoxyethylene alkyl ethers such as polyoxyethylene lauryl ether and polyoxyethylene cetyl ether; polyoxyethylene polyoxypropylene alkyl ethers such as polyoxyethylene polyoxypropylene cetyl ether; polyoxyethylene alkylphenyl ethers such as polyoxyethylene nonylphenyl ether; polyoxyethylene sorbitan fatty acid esters such as polyoxyethylene sorbitan monopalmitate; and polyvinyl pyrrolidone-based resins such as polyvinyl pyrrolidone, copolymers of vinyl pyrrolidone with vinyl acetate, and copolymers of vinyl pyrrolidone with vinyl caprolactam. Among them, triethylene glycol or glycerin is preferable. As the phase separation accelerator, the compounds recited above as examples may be used singly or two or more thereof may be used in combination.

The HSP distance between the thermoplastic resin and a mixture of the solvent and the phase separation accelerator in the membrane-forming stock solution is preferably 3.75 or more and 6.50 or less.

In order to obtain a porous membrane superior in balance among water permeability, strength, and elongation, it is important that the phase separation process does not change in the process of porous membrane formation, that is, the fractal dimension is constant. In thermally induced phase separation, a spherulite structure is most likely to cause a process change from the three-dimensional network structure during the process of porous membrane formation. In order to inhibit the generation of a spherulite structure due to a change in the phase separation process, it is important to increase the rate of phase separation and form a phase structure in a shorter time. The rate of phase separation is mainly determined by the composition of the membrane-forming stock solution.

As the HSP distance between the resin and the mixture of the solvent and the phase separation accelerator is longer, the solubility of the resin is lower, so that phase separation is more likely to occur. On the other hand, since phase separation is less likely to occur as the HSP distance is shorter, the rate of phase separation is lower, a spherulite structure is generated, and not only a partial increase in fractal dimension is caused, but also water permeability, strength, and elongation may be deteriorated. When the HSP distance is 6.5 or less, the thermoplastic resin can be dissolved well, and a suitable porous membrane can be formed. On the other hand, when the HSP distance is 3.75 or more, phase separation is likely to occur, and a porous membrane superior in balance among water permeability, strength, and elongation can be obtained. The HSP distance is more preferably 3.8 or more and 6.0 or less, and still more preferably 4 or more and 6 or less.

Here, the HSP distance is a Hansen solubility parameter (Hansen C.M., Hansen Solubility Parameters: A User's Handbook, Second Edition, CRC Press (2007)). When the distance (Ra) between the thermoplastic resin and the mixture of the solvent and the phase separation accelerator is compared, the parameter indicates that the longer the distance is (the larger the numerical value is), the lower the solubility is. Ra between the substances 1 and 2 is expressed by the following mathematical expression (4). Here, $\delta d$ denotes a dispersion force term $[(MPa)^{1/2}]$ of the SP value (solubility parameter), $\delta p$ denotes a dipole-dipole force term $[(MPa)^{1/2}]$ of the SP value, and $\delta h$ denotes a hydrogen bonding force $[(MPa)^{1/2}]$ of the SP value.

$$\text{Ra between 1 and 2} = (4\,(\delta d_1 - \delta d_2)^2 + (\delta p_1 - \delta p_2)^2 + (\delta h_1 - \delta h_2)^2)^{1/2} \qquad (4)$$

In the case of the mixture of the solvent and the phase separation accelerator, $\delta d$, $\delta p$, and $\delta h$ are calculated on the basis of the following formula (5) using $\delta d$, $\delta p$, and $\delta h$ of each single substance and the mass fraction thereof, and then Ra is calculated.

$$\delta d = \delta d \times (\text{mass fraction of solvent}) + \delta d \times (\text{mass fraction of phase separation accelerator})$$
$$(5)$$

Examples of the solubility parameter based on the literature (Allan F.M. Barton, "CRC Handbook of solubility parameters and other cohesion parameters" CRC Corp. 1991) and so on are shown in Table 1 below. In the case of a mixed solvent, parameters calculated from the respective solubility parameters based on their masses in accordance with an additive rule are used.

[Table 1]

| Name | | Solubility parameters | | |
|---|---|---|---|---|
| | | $\delta d$ | $\delta p$ | $\delta h$ |
| Polyvinylidene fluoride | PVDF | 17.2 | 12.5 | 9.2 |
| $\gamma$-Butyrolactone | GBL | 19.0 | 16.6 | 7.2 |
| Glycerin | Gly | 17.4 | 12.1 | 29.3 |
| Triethylene glycol | tri-EG | 16.0 | 12.5 | 18.6 |

As the composition of the membrane-forming stock solution containing at least the thermoplastic resin, the filler, the solvent, and the phase separation accelerator, the content ratio of each component in the membrane-forming stock solution is not particularly limited, but from the viewpoint of the balance among the water permeability, the strength, and the elongation of a porous membrane to be formed, it is preferable that the thermoplastic resin is 18% by mass or more and 40% by mass or less, the solvent is 10% by mass or more and 60% by mass or less, the phase separation accelerator is 10% by mass or more and 30% by mass or less, and the filler is 10% by mass or more and 50% by mass or less, in terms of a mass ratio based on the overall amount of the membrane-forming stock solution. It is preferable to configure such that the content ratio thereof is 100. When the content ratio of each component in the membrane-forming stock solution is within the above range, a suitable porous membrane can be formed.

To the membrane-forming stock solution, various additives such as an antioxidant, an ultraviolet absorber, a lubricant, an anti-blocking agent, and a dye may be added as necessary as long as the object of the present invention is not impaired.

The method for preparing the membrane-forming stock solution is not particularly limited, and the membrane-forming stock solution can be prepared by any method. For example, the membrane-forming stock solution can be prepared by mixing and kneading the thermoplastic resin, the filler, the solvent, and the phase separation accelerator described above. At the time of kneading, for example, a twin-screw kneading device, a kneader, a mixer, or the like can be used. Here, the kneading temperature (the temperature at the time of dissolving the thermoplastic resin in the solvent) is not particularly limited, but it is preferably a temperature higher than the phase separation onset temperature at which phase separation of the membrane-forming stock solution starts because the membrane-forming stock solution is extruded at a temperature higher than the phase separation onset temperature due to a temperature change in the extrusion step described later. The kneading temperature is preferably 60 to 250°C, and more preferably 80 to 200°C.

When the kneading temperature is a temperature higher than the phase separation onset temperature, an increase in the viscosity of the membrane-forming stock solution is inhibited, and a porous membrane having a suitable membrane structure can be obtained. Specifically, spherulites and macrovoids are hardly formed, and a porous membrane having sufficient strength can be obtained. When the kneading temperature is 250°C or lower, thermal degradation of the thermoplastic resin is inhibited, and a porous membrane having a suitable membrane structure can be obtained. Specifically, macrovoids and a dense layer are hardly formed and a porous membrane superior in balance among water permeability, strength, and elongation can be obtained.

The temperature at which the phase separation starts is a temperature at which the phase separation starts by lowering the temperature of the membrane-forming stock solution. The temperature at which phase separation starts is specifically measured as follows (for more information, see Non-patent Literature: Structure of Polymer Alloy/Physical Property Control and Latest Technology, Toshiaki Ougizawa, Kazunori Se, Akio Imai, Information Organization). First, a slide glass and a cover glass are placed on a stage of an optical microscope with a temperature controller and heated to reach 120°C. A membrane-forming stock solution in a homogeneous phase state is sandwiched between the heated slide glass and the cover glass. Then, the temperature of the slide glass and the cover glass is decreased or increased little by little, e.g., decreased by 3°C every time, white turbidity (due to a difference between refractive indices of two phases) produced during phase separation is visually confirmed, and a temperature at which that confirmation is made is measured. This temperature is defined as a temperature at which phase separation starts. That is, this measurement method is a method in which when the membrane-forming stock solution is transparent, the solution is considered to be in a homogeneous phase state, and when the membrane-forming stock solution is cloudy, the solution is considered to be in a phase separation state, and the temperature at the time when cloudiness is partially confirmed is defined as the temperature at which phase separation starts (phase separation onset temperature).

In the method for measuring the phase separation onset temperature, when there is a filler (silica or the like), the filler is not dissolved and causes clouding, so that it is difficult to measure the phase separation onset temperature. Therefore, in the case of a composition containing a filler, a pseudo phase separation onset temperature in the component excluding the filler is measured.

The membrane-forming stock solution is preferably subjected to deaeration using a vacuum pump during or after kneading. As a result of performing deaeration, a stable stock solution containing less impurities and less bubbles can be obtained.

(Extrusion Step)

The membrane-forming stock solution thus obtained is extruded through a slit or a nozzle having a double tube structure or the like at a temperature higher than the phase separation onset temperature at which phase separation of the membrane-forming stock solution starts due to a temperature change. When the extrusion temperature is a temperature higher than the phase separation onset temperature, the membrane-forming stock solution can maintain a homogeneous dissolved state, so that a porous membrane having a suitable membrane structure can be obtained.

The thickness of the extruded membrane-forming stock solution is not particularly limited, but is preferably 50 μm or more and 1000 μm or less, more preferably within a range of 50 to 700 μm, and still more preferably within a range of 50 to 500 μm. When the thickness is 50 μm or more, a porous membrane having sufficient strength is obtained, and deformation such as distortion hardly occurs. When the thickness is 1000 μm or less, macrovoids are less likely to occur, and a suitable membrane structure can be obtained.

The form of the extruded membrane-forming stock solution is not particularly limited, and may be arbitrarily set to, for example, a flat membrane form, a hollow fiber form, a tubular form, or the like. Among these, a hollow fiber form is preferable from the viewpoint that the membrane area can be increased and an enhanced treatment capability of the membrane can be obtained.

In the case of manufacturing a hollow fiber membrane, when it is desired to enhance water permeability, for example, it is preferable in the extrusion step to use a multi-ring nozzle such as a hollow fiber forming nozzle including a circular ring-shaped outer discharge port and a circular or circular ring-shaped inner discharge port arranged inside the outer discharge port and extrude the membrane-forming stock solution through the outer discharge port while extruding an internal coagulating liquid through the inner discharge port, thereby bringing the extruded membrane-forming stock solution in a hollow fiber form into contact with the internal coagulating liquid. This is considered to be because the solvent exchange between the inner peripheral surface side of the membrane-forming stock solution in a hollow fiber form extruded from the hollow fiber molding nozzle and the internal coagulating liquid is performed at a suitable rate. Therefore, it is considered that a hollow fiber membrane having a suitable structure in the vicinity of the inner peripheral surface side can be obtained, and the hollow fiber membrane superior in both water permeability and fractionation characteristic can be more suitably manufactured.

The internal coagulating liquid is not particularly limited as long as it is a coagulating liquid that can be used as an internal coagulating liquid when manufacturing a hollow fiber membrane. Examples of the internal coagulating liquid specifically include a mixed solvent of dimethylacetamide and glycerin, a mixed solvent of $\gamma$-butyrolactone and glycerin, a mixed solvent of $\gamma$-butyrolactone and ethylene glycol, a mixed solvent of $\gamma$-butyrolactone and water, a mixed solvent of dimethylacetamide and water, a mixed solvent of dimethylacetamide and ethylene glycol, and a mixed solvent of dimethylformamide and water. Among them, a mixed solvent of $\gamma$-butyrolactone and glycerin, a mixed solvent of dimethylacetamide and water, or water is preferable from the viewpoint of good formability of a hollow fiber membrane.

(Formation Step)

The membrane-forming stock solution extruded through a slit or a nozzle is brought into contact with a coagulating liquid (external coagulating liquid), and cooled and solidified to form a porous membrane.

The extruded membrane-forming stock solution may be caused to travel in a gas (usually air) before being brought into contact with the coagulating liquid (external coagulating liquid). That is, either of a so-called dry membrane formation method in which a membrane-forming stock solution is extruded through a nozzle, then caused to travel in a gas (usually air) over a prescribed distance (usually 5 to 300 mm), and then coagulated in a coagulating liquid, and a so-called wet membrane formation method in which a membrane-forming stock solution is extruded through a nozzle and coagulated in a coagulating liquid described later is applicable. In the dry membrane formation method, as necessary, the periphery of the extruded membrane-forming stock solution during traveling may be surrounded to prevent disturbance of the air layer around the traveling fiber, or the air temperature and humidity may be adjusted.

As the coagulating liquid, any coagulating liquid can be used as long as the effect of the present invention is not impaired, but the coagulating liquid is used for cooling the extruded membrane-forming stock solution, and the temperature of the coagulating liquid is preferably a temperature lower than the phase separation onset temperature of the membrane-forming stock solution. If so, phase separation based on the TIPS method is likely to proceed, and a suitable porous membrane can be obtained.

Furthermore, a temperature difference between the temperature of the membrane-forming stock solution and the temperature of the coagulating liquid is preferably 55°C or more and 100°C or less.

When a porous membrane is formed by a thermally induced phase separation method, the driving force of phase separation is heat, and therefore when the temperature difference between the membrane-forming stock solution and the coagulating liquid is smaller, heat transfer is delayed, so that phase separation easily proceeds. On the other hand, as the temperature difference is larger, heat transfer is faster, and thus phase separation is less likely to proceed.

Specifically, when the temperature difference is larger than 100°C, crystallization proceeds due to rapid cooling of the heated membrane-forming stock solution earlier than the proceeding of phase separation, so that the phase structure is changed in the course of the phase separation process, and a structure with a process change, such as a spherulite structure, is likely to be generated, which not only causes a partial increase in fractal dimension but also deteriorates the balance among water permeability, strength, and elongation. In addition, when the temperature difference is less than 55°C, a change in the phase separation process hardly occurs, and thus it is considered that no large problem occurs in the balance among water permeability, strength, and elongation. However, since the temperature of the coagulating liquid is excessively high, not only energy consumption in manufacture is large, but also problems occur in terms of equipment and safety. Therefore, such a temperature difference is undesirable.

The temperature difference between the temperature of the coagulating liquid and the temperature of the membrane-forming stock solution is more preferably 55°C or more and 90°C or less, and still more preferably 65°C or more and 90°C or less.

The composition of the coagulating liquid is not particularly limited, but the coagulating liquid preferably contains a nonsolvent, and, for example, preferably contains water, ethanol, or the like corresponding to the nonsolvent. In addition, a nonsolvent and a good solvent or a poor solvent may be used in combination. However, water, which is a nonsolvent, is preferable from the viewpoint of industrial ease of use.

(Stretching Step)

The porous membrane after the formation step may be stretched in the longitudinal direction. This stretching method is not particularly limited, and examples thereof include a stretching treatment in a water bath, for example, a heated water bath. When the force applied to the stretching is released after the stretching, the membrane shrinks in the longitudinal direction. When the porous membrane is subjected to such stretching and shrinkage, the water permeability of the porous membrane is improved. This is considered to be because isolated pores existing in the membrane are cleaved to form interconnected pores, so that the interconnectivity in the membrane is improved and the water permeability is improved. Furthermore, such stretching and shrinkage also offer an advantage that the direction of the fibers of the porous membrane is homogenized and the strength is improved. In the manufacturing method according to the present embodiment, the stretching and the shrinkage may not be performed.

(Extraction Step)

From the porous membrane after the formation step or after the stretching step may be extracted the solvent, the filler, and the phase separation accelerator. The extraction of these components may be performed continuously with steps of extrusion, formation, stretching, and so on. Alternatively, the extraction may be performed after the stretched porous membrane is once wound around a frame, a skeiner, or the like, or may be performed after the porous membrane is put in a case having a prescribed shape and forms a module. The extraction is preferably performed after the stretching, and since voids have been increased on the surface and inside of the membrane by the stretching, there is an advantage that the extraction solvent easily permeates the inside of the membrane.

A solvent may be used for the extraction of each of the components described above. The solvent to be used needs to be a nonsolvent for the thermoplastic resin at the extraction temperature. As the extraction solvent, extraction with an alkaline solution is suitable when the filler is silica. Further, when the phase separation accelerator is poorly soluble in water, examples of the extraction solvent include hexane, acetone, and methanol, and when the phase separation accelerator is soluble in water, the extraction solvent may be water. Multi-stage extraction may be performed in which the extraction solvent is changed depending on the component to be extracted. The obtained porous membrane is preferably dried after the extraction treatment.

[NIPS Method]

The NIPS method is a method in which a phase separation phenomenon is caused by taking-in of a nonsolvent. More specifically, examples of the method for manufacturing the porous membrane according to the present embodiment based on the NIPS method include a method in which a membrane-forming stock solution containing a thermoplastic resin, a solvent, and a phase separation accelerator is prepared, the membrane-forming stock solution is extruded, and the extruded membrane-forming stock solution is brought into contact with a coagulating liquid containing at least a nonsolvent to form a porous membrane on the basis of a nonsolvent induced phase separation method.

(Preparation Step)

For the manufacture of the porous membrane according to the present embodiment, first, a membrane-forming stock solution containing a thermoplastic resin, a solvent, and a phase separation accelerator is prepared.

As the thermoplastic resin, the thermoplastic resins recited as examples of the thermoplastic resin contained in the porous membrane can be used.

The solvent may be either a poor solvent or a good solvent, but a good solvent is preferable. In addition, the solvent may contain a nonsolvent.

Examples of the solvent include γ-butyrolactone, ε-caprolactone, ε-caprolactam, dimethylformamide, dimethylsulfoxide, dimethylacetamide, N-methylpyrrolidone, phthalic acid esters such as dimethyl phthalate, diethyl phthalate, dibutyl phthalate, dicyclohexyl phthalate, diheptyl phthalate, dioctyl phthalate, and di(2-ethylhexyl) phthalate; benzoic acid esters such as methyl benzoate and ethyl benzoate; phosphoric acid esters such as triphenyl phosphate, tributyl phosphate, and tricresyl phosphate; ketones such as γ-butyrolactone, ethylene carbonate, propylene carbonate, cyclohexanone, acetophenone, and isophorone. Among them, a water-soluble solvent is preferable, and when a water-soluble solvent is used, water can be used when the solvent is extracted from the porous membrane after membrane formation. The extracted solvent can be disposed of by biological treatment or the like. For the manufacture of the porous membrane of the present invention, γ-butyrolactone and dimethylformamide are preferable among the solvents recited above from the viewpoint of environmental load, safety, and cost. As the solvent, the compounds recited above as examples may be used singly or two or more thereof may be used in combination.

Examples of the phase separation accelerator include polyhydric alcohols such as ethylene glycol, propylene glycol, triethylene glycol, tetraethylene glycol, polyethylene glycol, and glycerin; polyglycerin fatty acid esters such as decaglyceryl monolaurate; polyoxyethylene glycerin fatty acid esters such as polyoxyethylene glycerin monostearate; polyoxyethylene alkyl ethers such as polyoxyethylene lauryl ether and polyoxyethylene cetyl ether; polyoxyethylene polyoxypropylene alkyl ethers such as polyoxyethylene polyoxypropylene cetyl ether; polyoxyethylene alkylphenyl ethers such as polyoxyethylene nonylphenyl ether; polyoxyethylene sorbitan fatty acid esters such as polyoxyethylene sorbitan monopalmitate; and polyvinyl pyrrolidone-based resins such as polyvinyl pyrrolidone, copolymers of vinyl pyrrolidone with vinyl acetate, and copolymers of vinyl pyrrolidone with vinyl caprolactam. Among them, polyvinylpyrrolidone and polyethylene glycol are preferable. As the phase separation accelerator, the compounds recited above as examples may be used singly or two or more thereof may be used in combination.

The HSP distance between the thermoplastic resin and a mixture of the solvent and the phase separation accelerator in the membrane-forming stock solution is preferably 4.85 or more and 7.5 or less.

In order to obtain a porous membrane superior in balance among water permeability, strength, and elongation, it is important that the phase separation process does not change in the process of porous membrane formation, that is, the fractal dimension is constant. In nonsolvent induced phase separation, a macrovoid structure is most likely to cause a process change from the three-dimensional network structure during the process of porous membrane formation. In order to inhibit the generation of a macrovoid structure or a spherulite structure due to a change in the phase separation process, it is important to increase the rate of phase separation and form a phase structure in a shorter time. The rate of phase separation is mainly determined by the composition of the membrane-forming stock solution.

As the HSP distance between the resin and the mixture of the solvent and the phase separation accelerator is longer, the solubility of the resin is lower, so that phase separation is more likely to occur. On the other hand, since phase separation is less likely to occur as the HSP distance is shorter, the rate of phase separation is lower, a spherulite structure is generated, and not only a partial increase in fractal dimension is caused, but also water permeability, strength, and elongation may be deteriorated. When the HSP distance is 7.5 or less, the thermoplastic resin can be dissolved well, and a suitable porous membrane can be formed. On the other hand, when the HSP distance is 4.85 or more, phase separation is likely to occur, and a porous membrane superior in balance among water permeability, strength, and elongation can be obtained. The HSP distance is more preferably 5.0 or more and 7.5 or less, and still more preferably 5 or more and 7 or less. It is noted that the HSP distance can be calculated by the same method as the method disclosed as an example in the above [TIPS Method].

Example of the solubility parameter (SP value) are shown in Table 2 below. From literature: Allan F.M. Barton, "CRC Handbook of solubility parameters and other cohesion parameters" CRC Corp. 1991; Mohsenpour S, Safekordi A, Tavakolmoghadam M, Rekabdar F, Hemmati M, Polymer, 97, 559-568 (2016); Zhou Z, Fang L, Cao Y, Wang W, Wang J, Yang Y, Liu Y, Colloids and Surfaces A, 601, 125031 (2020); Journal of membrane Science, 532, 2017, 47-57, etc., SP values are cited for reference.

Table 2]

| Name | | Solubility parameters | | |
|---|---|---|---|---|
| | | $\delta d$ | $\delta p$ | $\delta h$ |
| Polyvinylidene fluoride | PVDF | 17.2 | 12.5 | 9.2 |
| Polysulfone | PSF | 19.0 | 0.0 | 7.0 |
| Polyvinylpyrrolidone | PVP | 21.4 | 11.6 | 21.6 |
| $\gamma$-Butyrolactone | GBL | 19.0 | 16.6 | 7.2 |
| Dimethylformamide | DMF | 17.4 | 13.7 | 11.3 |
| Polyethylene glycol | PEG 600 | 17.0 | 10.7 | 8.9 |
| Water | | 15.5 | 16.0 | 42.3 |

As the composition of the membrane-forming stock solution containing at least the thermoplastic resin, the solvent, and the phase separation accelerator, the content ratio of each component in the membrane-forming stock solution is not particularly limited, but from the viewpoint of the balance among the water permeability, the strength, and the elongation of a porous membrane to be formed, it is preferable that the thermoplastic resin is preferably 10% by mass or more and 40% by mass or less, the solvent is preferably 10% by mass or more and 60% by mass or less, and the phase separation accelerator is preferably 10% by mass or more and 30% by mass or less, in terms of a mass ratio based on the overall amount of the membrane-forming stock solution. It is preferable to configure such that the content ratio thereof is 100. When the content ratio of each component in the membrane-forming stock solution is within the above range, a suitable porous membrane can be formed.

To the membrane-forming stock solution, various additives such as an antioxidant, an ultraviolet absorber, a lubricant, an anti-blocking agent, and a dye may be added as necessary as long as the object of the present invention is not impaired.

The method for preparing the membrane-forming stock solution is not particularly limited, and the membrane-forming stock solution can be prepared by any method. For example, the membrane-forming stock solution can be prepared by mixing and kneading the thermoplastic resin, the solvent, and the phase separation accelerator described above. At the time of kneading, for example, a twin-screw kneading device, a kneader, a mixer, or the like can be used. Here, the kneading temperature (the temperature at the time of dissolving the thermoplastic resin in the solvent) is not particularly limited, and may be either room temperature or a raised temperature. For example, 10 to 100°C is preferable.

The membrane-forming stock solution is preferably subjected to deaeration using a vacuum pump during or after kneading. As a result of performing deaeration, a stable stock solution containing less impurities and less bubbles can be obtained.

(Extrusion Step)

The membrane-forming stock solution thus obtained is extruded through a slit or a nozzle having a double tube structure or the like.

The thickness of the extruded membrane-forming stock solution is not particularly limited, but is preferably 50 $\mu$m or more and 1000 $\mu$m or less, more preferably within a range of 50 to 700 $\mu$m, and still more preferably within a range of 50 to 500 $\mu$m. When the thickness is 50 $\mu$m or more, a porous membrane having sufficient strength is obtained, and deformation such as distortion hardly occurs. When the thickness is 1000 $\mu$m or less, macrovoids are less likely to occur, and a suitable membrane structure can be obtained.

The form of the extruded membrane-forming stock solution is not particularly limited, and may be arbitrarily set to, for example, a flat membrane form, a hollow fiber form, a tubular form, or the like. Among these, a hollow fiber form is preferable from the viewpoint that the membrane area can be increased and an enhanced treatment capability of the membrane can be obtained.

In the case of manufacturing a hollow fiber membrane, when it is desired to enhance water permeability, for example, it is preferable in the extrusion step to use a multi-ring nozzle such as a hollow fiber forming nozzle including a circular ring-shaped outer discharge port and a circular or circular ring-shaped inner discharge port arranged inside the outer discharge port and extrude the membrane-forming stock solution through the outer discharge port while extruding an internal coagulating liquid through the inner discharge port, thereby bringing the extruded membrane-forming stock solution in a hollow fiber form into contact with the internal coagulating liquid. This is considered to be because the solvent exchange between the inner peripheral surface side of the membrane-forming stock solution in a hollow fiber form extruded from the hollow fiber molding nozzle and the internal coagulating liquid is performed at a suitable rate. Therefore, it is considered that a hollow fiber membrane having a suitable structure in the vicinity of the inner peripheral surface side can be obtained, and the hollow fiber membrane superior in both water permeability and fractionation characteristic can be more suitably manufactured.

The internal coagulating liquid is not particularly limited as long as it is a coagulating liquid that can be used as an internal coagulating liquid when manufacturing a hollow fiber membrane. That is, the internal coagulating liquid may be, for example, any coagulating liquid that can coagulate from the inner peripheral surface side of the membrane-forming stock solution having a hollow fiber form. Examples of the internal coagulating liquid include a mixed solvent of dimethylacetamide and glycerin, a mixed solvent of $\gamma$-butyrolactone and glycerin, a mixed solvent of $\gamma$-butyrolactone and ethylene glycol, a mixed solvent of $\gamma$-butyrolactone and water, a mixed solvent of dimethylacetamide and water, a mixed solvent of dimethylacetamide and ethylene glycol, and a mixed solvent of dimethylformamide and water. Among them, a mixed solvent of $\gamma$-butyrolactone and glycerin, a mixed solvent of dimethylacetamide and water, or water is preferable from the viewpoint of good formability of a hollow fiber membrane.

(Formation Step)

The membrane-forming stock solution extruded through a slit or a nozzle is brought into contact with a coagulating liquid (external coagulating liquid) to form a porous membrane.

The extruded membrane-forming stock solution may be caused to travel in a gas (usually air) before being brought into contact with the coagulating liquid (external coagulating liquid). That is, either of a so-called dry membrane formation method in which a membrane-forming stock solution is extruded through a nozzle, then caused to travel in a gas (usually air) over a prescribed distance (usually 5 to 300 mm), and then coagulated in a coagulating liquid, and a so-called wet membrane formation method in which a membrane-forming stock solution is extruded through a nozzle and coagulated in a coagulating liquid described later is applicable. In the dry membrane formation method, as necessary, the periphery of the extruded membrane-forming stock solution during traveling may be surrounded to prevent disturbance of the air layer around the traveling fiber, or the air temperature and humidity may be adjusted.

The coagulating liquid contains at least a nonsolvent, and preferably satisfies that the HSP distance between the membrane-forming stock solution and the coagulating liquid is 30 or more and 34.2 or less as described later, and the coagulating liquid may contain a good solvent or a poor solvent. The nonsolvent to be used is not limited to one type, and may be a mixture of two or more types of nonsolvents.

In order to inhibit the generation of a macrovoid structure due to a change in a phase separation process, it is necessary to prevent liquid exchange between the coagulating liquid and the membrane-forming stock solution from instantaneously occurring. When instantaneous liquid exchange occurs, the nonsolvent is rapidly taken in, so that a dense layer is generated on the surface, whereby the process of forming the three-dimensional network structure is changed, and macrovoids or a spherulite structure may be caused. In order to inhibit instantaneous taking-in of liquid exchange, the HSP distance between the mixture of the thermoplastic resin, the solvent and the phase separation accelerator and the coagulating liquid is important, and the range thereof is preferably 30 or more and 34.2 or less.

When the HSP distance is 34.2 or less, the nonsolvent is not rapidly taken in, macrovoids or a spherulite structure is hardly generated, the fractal dimension is constant, and, as a result, a porous membrane superior in balance among water permeability, strength, and elongation is obtained. On the other hand, when the HSP distance is 30 or more, the polymer can be dissolved well, so that a porous membrane can be suitably formed. The HSP distance is more preferably 30 or more and 34 or less, and still more preferably 32 or more and 34 or less.

It is noted that the HSP distance can be calculated by the same method as the method disclosed as an example in the above [TIPS Method].

The temperature of the coagulating liquid is preferably a temperature higher than the phase separation onset temperature at which the phase separation of the membrane-forming stock solution starts, and specifically, more preferably 10°C or higher. When the temperature of the coagulating liquid is equal to or lower than the phase separation onset temperature of the membrane-forming stock solution, the TIPS method is to be adopted, and it is difficult to form a suitable porous membrane. The temperature of the coagulating liquid is preferably equal to or lower than the boiling point of the coagulating liquid, and specifically, is preferably 100°C or lower. When the temperature of the coagulating liquid is lower than the boiling point of the coagulating liquid, there is no possibility that the coagulating liquid boils to vibrate, so that a porous membrane can be stably manufactured. When the temperature of the coagulating liquid is excessively high, the phase separation of the membrane-forming stock solution is promoted, so that water permeation performance tends to be excessively enhanced.

(Stretching Step/Extraction Step)

The porous membrane formed in the formation step may, as necessary, be subjected to the stretching and the extraction treatment disclosed exemplarily in the above [TIPS Method].

<Applications>

The porous membrane of the present embodiment is superior in balance among water permeability, strength, and elongation, and is used, for example, as a module including a large number of membranes. Various structures such as a type in which both ends of the porous membranes are open and fixed, of a type in which one ends of the porous membranes are open and fixed and the other ends are sealed, but not fixed are known as the structure of this module. The porous membranes according to the present embodiment can be used in any of the module structures.

The porous membrane of the present embodiment is superior in balance among water permeability, strength, and elongation, and can be widely and effectively used in water treatment fields such as water purification, drinking water production, industrial water production, and wastewater treatment, food industry fields, pharmaceutical product production fields, and so on.

Although the present description discloses the techniques of various aspects as described above, the main technology among them is summarized below.

A porous membrane according to one aspect of the present invention is a porous membrane having a porous structure, and the porous membrane is characterized in that when a fractal dimension is calculated under a plurality of conditions including at least two or more conditions, the fractal dimension being to be calculated from image data obtained by photographing a porous structure on a cut section formed by cutting the porous membrane on a discretionary section in which at least the porous structure is observed, at a discretionary photographing position and a discretionary photographing magnification at which at least the porous structure of the membrane section is observed, all of the fractal dimensions calculated under each of the plurality of conditions are 1.5 or more and 1.9 or less.

Owing to such a configuration, a porous membrane superior in balance among water permeability, strength, and elongation is obtained.

In addition, in a case where the fractal dimension is calculated under a plurality of conditions including at least two or more conditions in the porous membrane, a difference between a maximum value and a minimum value of the fractal dimensions calculated under each of the plurality of conditions is preferably 0.1 or less. Owing to such a configuration, a porous membrane superior in balance among water permeability, strength, and elongation is more surely obtained.

Furthermore, in the porous membrane, when the fractal dimension is calculated under a plurality of conditions including at least six or more conditions, a CV value of the fractal dimensions calculated under each of the plurality of conditions is preferably 0.1% or more and 2.0% or less. Owing to such a configuration, a porous membrane superior in balance among water permeability, strength, and elongation is more surely obtained.

In addition, the porous membrane preferably contains a thermoplastic resin. Owing to such a configuration, a porous membrane superior in balance among water permeability, strength, and elongation is more surely obtained.

Furthermore, the structure of the porous membrane is preferably a three-dimensional network structure. When the structure is a three-dimensional network structure, the porous membrane has good interconnectivity between pores adjacent to each other, so that resistance generated when water passes through the porous membrane is small, high water permeation performance can be exhibited, and a porous membrane superior in balance among water permeability, strength, and elongation can be more surely obtained.

In addition, the porous membrane is preferably in a hollow fiber form. Such a configuration can widen the membrane area and can enhance the processing capability.

Further, the porous membrane preferably has a tensile strength at break of 8.0 N/mm$^2$ or more and 15 N/mm$^2$ or less. Owing to such a configuration, the porous membrane can be effectively utilized in a field where a load on the membrane is large, such as wastewater recovery and concentration operation.

The porous membrane preferably has a tensile strength at break of 3.2 N/mm$^2$ or more and 6.5 N/mm$^2$ or less. Owing to such a configuration, the porous membrane can be effectively utilized in a field where a load on the membrane is large, such as water purification treatment and medical water.

Furthermore, a method for manufacturing the porous membrane according to another aspect of the present invention includes a preparation step of preparing a membrane-forming stock solution containing a thermoplastic resin, a filler, a solvent, and a phase separation accelerator; an extrusion step of extruding the membrane-forming stock solution at a temperature higher than a phase separation onset temperature at which phase separation of the membrane-forming stock solution starts due to a temperature change; and a step of forming a porous membrane on a basis of a thermally induced phase separation method in which the extruded membrane-forming stock solution is brought into contact with a coagulating liquid having a temperature lower than the phase separation onset temperature of the membrane-forming stock solution, in which an HSP distance between the thermoplastic resin and a mixture of the solvent and the phase separation accelerator in the membrane-forming stock solution is 3.75 or more and 6.50 or less, and a temperature difference between the temperature of the membrane-forming stock solution and the temperature of the coagulating liquid is 55°C or more and 100°C or less.

Owing to such a configuration, a porous membrane superior in balance among water permeability, strength, and elongation is obtained.

A method for manufacturing a porous membrane according to still another aspect of the present invention includes a preparation step of preparing a membrane-forming stock solution containing a thermoplastic resin, a solvent, and a phase separation accelerator; an extrusion step of extruding the membrane-forming stock solution; and a formation step of forming a porous membrane on the basis of a nonsolvent induced phase separation method in which the membrane-forming stock solution extruded is brought into contact with a coagulating liquid containing at least a nonsolvent, in which an HSP distance between the thermoplastic resin and a mixture of the solvent and the phase separation accelerator in the membrane-forming stock solution is 4.85 or more and 7.50 or less, and an HSP distance between the membrane-forming stock solution and the coagulating liquid is 30 or more and 34.2 or less.

Owing to such a configuration, a porous membrane superior in balance among water permeability, strength, and elongation is obtained.

**Examples**

Hereinafter, the present invention will be explained more specifically with reference to Examples, but the present invention is not limited at all by the Examples. Physical property values in Examples were measured by the following methods.

<Measurement Method>

(Pure Water Permeation Speed)

A hollow fiber membrane to be measured is subjected to a wetting treatment that involves immersing the hollow fiber membrane in a 50% by mass aqueous ethanol solution for 15 minutes, and subsequently washing the hollow fiber membrane with pure water for 15 minutes. Using a porous hollow fiber membrane module having an effective length of 20 cm in which one end of the hollow fiber membrane subjected to the wetting treatment is sealed, pure water is used as raw water, and external pressure filtration is performed under the conditions of a filtration pressure of 100 kPa and a temperature of 25°C and the water permeation amount per hour is measured. The water permeation amount measured is converted into the water permeation amount per unit membrane area, unit time, and unit pressure and thus a water permeation amount ($L/m^2/hr$) at a transmembrane pressure difference of 0.1 MPa was obtained.

(Nominal Pore Size)

The nominal pore size of the hollow fiber membranes obtained was measured by the following method.
The blocking rate of at least three or more types of particles differing in particle size (CATALOID SI-550, CATALOID SI-45P, CATALOID SI-80 P, and the like manufactured by JGC Catalysts and Chemicals Ltd.) was measured, and based on the measured values, the value of S at which R was 90 in the following approximation (6) was determined, and this was defined as a nominal pore size.

$$R = 100/(1 - m \times \exp(-a \times \log(S))) \qquad (6)$$

In the above formula, a and m are constants determined by the hollow fiber membrane and are calculated based on the measured values of two or more blocking rates.

(Tensile Strength at Break)

Using an Autograph (AG-Xplus manufactured by Shimadzu Corporation), a tensile test in which a test piece (a hollow fiber membrane in a wet state) was pulled at a speed of 100 mm/min in water at 25°C was performed. At that time, the tensile strength at break was determined from the load applied at the time of breaking.

(Tensile Elongation at Break)

In the tensile test, the tensile elongation at break was determined from the elongation of the test piece at break using the formula (3).

<Test Example 1>

(Example 1)

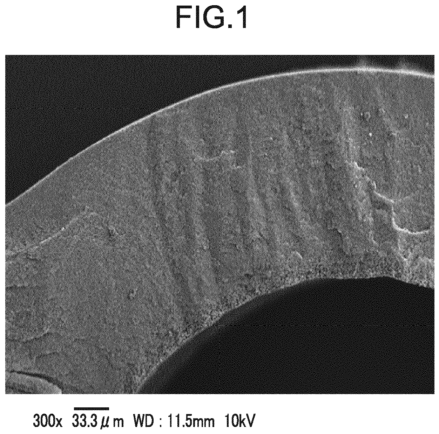

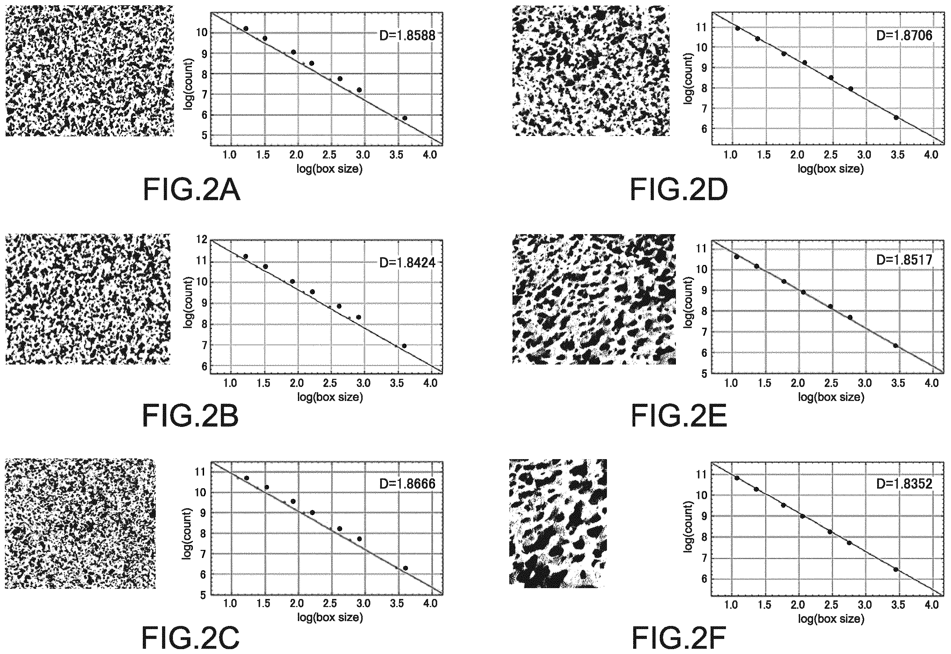

A membrane-forming stock solution was prepared in such a manner that polyvinylidene fluoride (SOLEF 6010 manufactured by Solvay SA) as a thermoplastic resin, γ-butyrolactone (GBL manufactured by Mitsubishi Chemical Corporation) as a solvent, triethylene glycol (Mitsubishi Chemical Corporation) as a phase separation accelerator, and silica (AEROSIL 50 manufactured by Nippon Aerosil Co., Ltd.) as a filler were present at a mass ratio of 34 : 21 : 18 : 27. The temperature at which the phase separation of the membrane-forming stock solution started when silica was removed was about 120°C.
The membrane-forming stock solution was heated and kneaded (temperature: 155°C) in a twin-screw extruder, and extruded through a nozzle having a double tube structure with an outer diameter of 1.6 mm and an inner diameter of 0.8 mm.
At this time, the membrane-forming stock solution was extruded such that the temperature (extrusion temperature) of the membrane-forming stock solution was 155°C. Into the hollow fiber core section was simultaneously discharged a mixed solution composed of dimethylacetamide (manufactured by Mitsubishi Gas Chemical Company, Inc.) and glycerin (Refined Glycerin manufactured by Kao Corporation) at a mass ratio of 60 : 40 as an internal coagulating liquid, and the resulting hollow fiber was introduced into an external coagulating liquid (temperature: 85°C) composed of water through an aerial travel distance of 3 cm, and cooled and solidified by passing through a water bath.
Subsequently, the hollow fiber material was heat-treated in water at 95°C for 120 minutes to perform extraction and removal of the solvent and the phase separation accelerator. Thereafter, the hollow fiber material was immersed in a 5% by mass aqueous sodium hydroxide solution at 40°C for 180 minutes to extract and remove the filler (silica), washed with water to remove sodium hydroxide until the pH of the resulting hollow fiber membrane became 8.0 or less, and then dried.
The hollow fiber membrane thus obtained had an outer diameter of 1.0 mm and an inner diameter of 0.6 mm. The membrane thickness was 0.2 mm.
The sectional structure of the hollow fiber membrane according to Example 1 was observed with a scanning electron microscope (SEM) (JSM-IT200 manufactured by JEOL Ltd.). The result is shown in FIG. 1.
In addition, the sectional structure was observed using a scanning electron microscope (SEM) (JSM-IT200 manufactured by JEOL Ltd.) under six conditions represented by the photographing position and magnification given below. The results are shown in FIG. 2. (Photographing condition 1: sectional outer peripheral portion: 5000 magnifications (left diagram of FIG. 2A), photographing condition 2: sectional outer peripheral portion: 10000 magnifications (left diagram of FIG. 2B), photographing condition 3: sectional central portion: 5000 magnifications (left diagram of FIG. 2C), photographing condition 4: sectional central portion: 10000 magnifications (left diagram of FIG. 2D), photographing condition 5: sectional inner peripheral portion: 5000 magnifications (left diagram of FIG. 2E), photographing condition 6: sectional inner peripheral portion: 10000 magnifications (left diagram of FIG. 2F)

The photographs shown in the left diagrams of FIGS. 2A to 2F were binarized to distinguish a solid portion (resin portion) and a void portion constituting a porous structure in one division, and a fractal dimension was calculated for the binarized image using the Box Counting function of Image J (right diagrams of FIGS. 2A to 2F).

In Table 3, the blending composition, the manufacture conditions, various performances, and the calculated fractal dimension of the porous membrane obtained of Example 1 are shown.

(Example 2)

A membrane-forming stock solution was prepared in such a manner that polyvinylidene fluoride (SOLEF 6010 manufactured by Solvay SA) as a thermoplastic resin, γ-butyrolactone (GBL manufactured by Mitsubishi Chemical Corporation) as a solvent, glycerin (Refined Glycerin manufactured by Kao Corporation) as a phase separation accelerator, and silica (Finesil X-35 manufactured by Oriental Silicas Corporation) as a filler were present at a mass ratio of 32 : 34 : 14 : 20. The temperature at which the phase separation of the membrane-forming stock solution started when silica was removed was about 140°C.

The membrane-forming stock solution was heated and kneaded (temperature: 155°C) in a twin-screw extruder, and extruded through a nozzle having a double tube structure with an outer diameter of 1.6 mm and an inner diameter of 0.8 mm.

At this time, the membrane-forming stock solution was extruded such that the temperature (extrusion temperature) of the membrane-forming stock solution was 155°C. Into the hollow fiber core section was simultaneously discharged a mixed solution composed of dimethylacetamide (manufactured by Mitsubishi Gas Chemical Company, Inc.) and glycerin (Refined Glycerin manufactured by Kao Corporation) at a mass ratio of 60 : 40 as an internal coagulating liquid, and the resulting hollow fiber was introduced into an external coagulating liquid (temperature: 70°C) composed of water through an aerial travel distance of 3 cm, and cooled and solidified by passing through an about 200 cm water bath.

Subsequently, the hollow fiber material was heat-treated in water at 95°C for 120 minutes to perform extraction and removal of the solvent and the phase separation accelerator. Thereafter, the hollow fiber material was immersed in a 5% by mass aqueous sodium hydroxide solution at 40°C for 180 minutes to extract and remove the filler (silica), washed with water to remove sodium hydroxide until the pH of the resulting hollow fiber membrane became 8.0 or less, and then dried.

The hollow fiber membrane thus obtained had an outer diameter of 1.25 mm and an inner diameter of 0.75 mm. The membrane thickness was 0.25 mm.

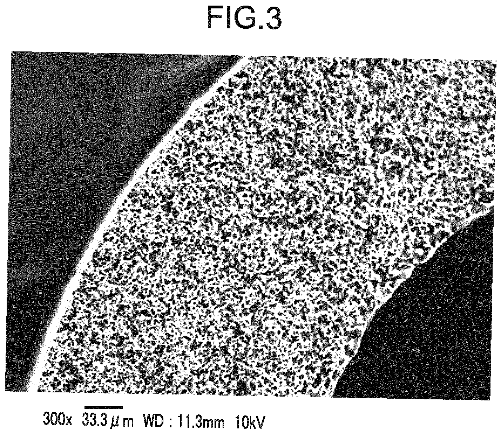

The sectional structure of the hollow fiber membrane according to Example 2 was observed with a scanning electron microscope (SEM) (JSM-IT200 manufactured by JEOL Ltd.). The result is shown in FIG. 3.

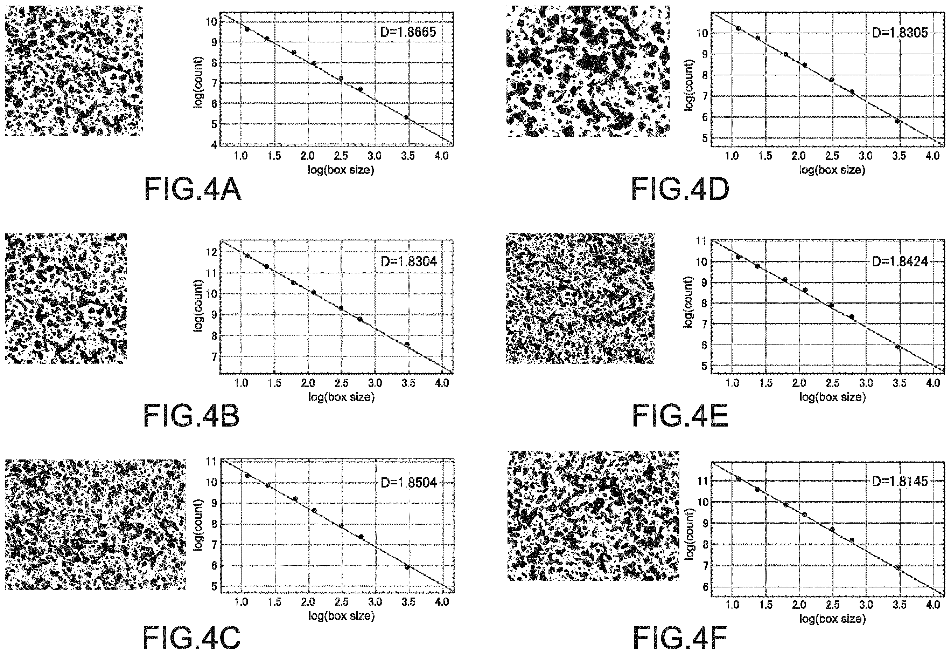

In addition, the sectional structure was observed using a scanning electron microscope (SEM) (JSM-IT200 manufactured by JEOL Ltd.) under six conditions represented by the photographing position and magnification given below. The results are shown in FIG. 4. (Photographing condition 1: sectional outer peripheral portion: 300 magnifications (left diagram of FIG. 4A), photographing condition 2: sectional outer peripheral portion: 1000 magnifications (left diagram of FIG. 4B), photographing condition 3: sectional central portion: 300 magnifications (left diagram of FIG. 4C), photographing condition 4: sectional central portion: 600 magnifications (left diagram of FIG. 4D), photographing condition 5: sectional inner peripheral portion: 300 magnifications (left diagram of FIG. 4E), photographing condition 6: sectional inner peripheral portion: 600 magnifications (left diagram of FIG. 4F)

The photographs shown in the left diagrams of FIGS. 4A to 4F were binarized to distinguish a solid portion (resin portion) and a void portion constituting a porous structure in one division, and a fractal dimension was calculated for the binarized image using the Box Counting function of Image J (right diagrams of FIGS. 4A to 4F).

In Table 3, the blending composition, the manufacture conditions, various performances, and the calculated fractal dimension of the porous membrane obtained of Example 2 are shown.

(Comparative Example 1)

A hollow fiber membrane was manufactured in the same manner as in Example 1 except that a membrane-forming stock solution was prepared in such a manner that polyvinylidene fluoride (SOLEF 6010 manufactured by Solvay SA) as a thermoplastic resin, γ-butyrolactone (GBL manufactured by Mitsubishi Chemical Corporation) as a solvent, triethylene glycol (manufactured by Mitsubishi Chemical Corporation) as a phase separation accelerator, and silica (AEROSIL 50 manufactured by Nippon Aerosil Co., Ltd.) as a filler were present at a mass ratio of 34 : 28 : 11 : 27, and the temperature of the coagulating liquid was set to 50°C. Then, analysis of fractal dimension was carried out. The temperature at which the phase separation of the membrane-forming stock solution started when silica was removed was about 110°C.

The hollow fiber membrane obtained had an outer diameter of 1.0 mm, an inner diameter of 0.6 mm, and a membrane thickness of 0.2 mm.

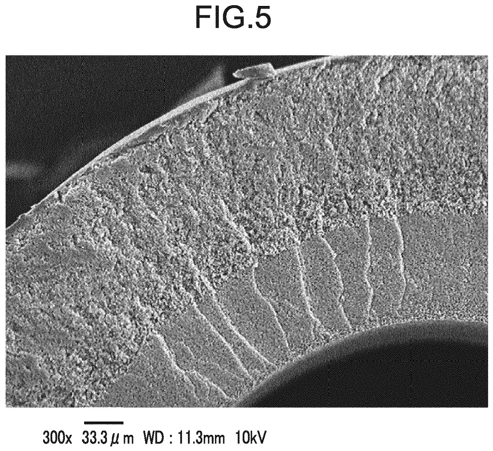

The sectional structure of the hollow fiber membrane according to Comparative Example 1 was observed with a scanning electron microscope (SEM) (JSM-IT200 manufactured by JEOL Ltd.). The result is shown in FIG. 5.

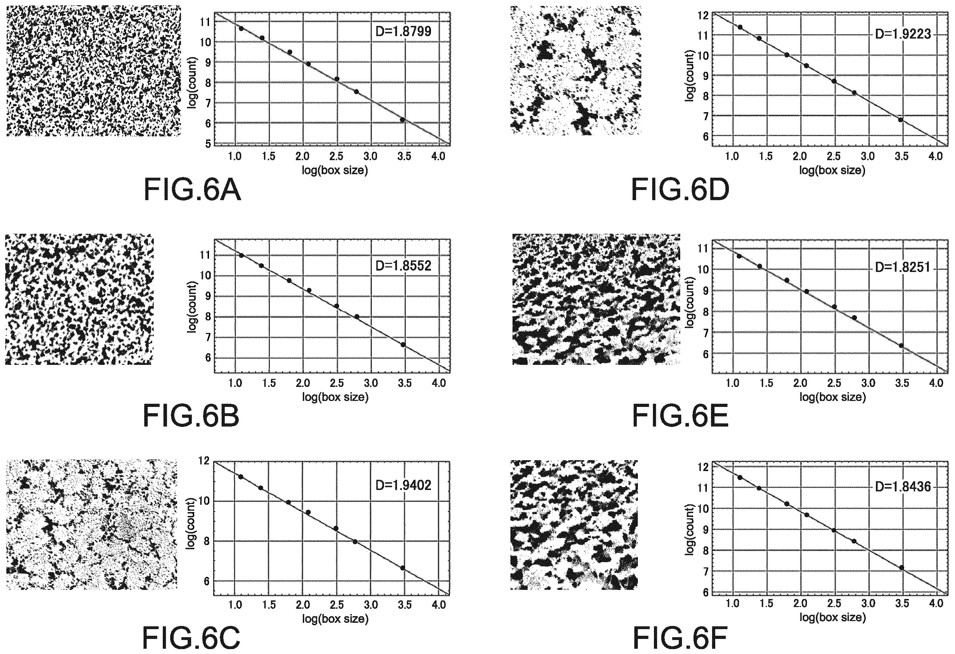

In addition, the sectional structure was observed using a scanning electron microscope (SEM) (JSM-IT200 manufactured by JEOL Ltd.) under six conditions represented by the photographing position and magnification given below. The results are shown in FIG. 6. (Photographing condition 1: sectional outer peripheral portion: 5000 magnifications (left diagram of FIG. 6A), photographing condition 2: sectional outer peripheral portion: 10000 magnifications (left diagram of FIG. 6B), photographing condition 3: sectional central portion: 5000 magnifications (left diagram of FIG. 6C), photographing condition 4: sectional central portion: 10000 magnifications (left diagram of FIG. 6D), photographing condition 5: sectional inner peripheral portion: 5000 magnifications (left diagram of FIG. 6E), photographing condition 6: sectional inner peripheral portion: 10000 magnifications (left diagram of FIG. 6F)

The photographs shown in the left diagrams of FIGS. 6A to 6F were binarized to distinguish a solid portion (resin portion) and a void portion constituting a porous structure in one division, and a fractal dimension was calculated for the binarized image using the Box Counting function of Image J (right diagrams of FIGS. 6A to 6F).

In Table 3, the blending composition, the manufacture conditions, various performances, and the calculated fractal dimension of the porous membrane obtained of Comparative Example 1 are shown.

(Reference Example 1)

A hollow fiber membrane was attempted to manufacture in the same manner as in Example 1 except that a membrane-forming stock solution was prepared in such a manner that polyvinylidene fluoride (SOLEF 6010 manufactured by Solvay SA) as a thermoplastic resin, γ-butyrolactone (GBL manufactured by Mitsubishi Chemical Corporation) as a solvent, triethylene glycol (manufactured by Mitsubishi Chemical Corporation) as a phase separation accelerator, and silica (AEROSIL 50 manufactured by Nippon Aerosil Co., Ltd.) as a filler were present at a mass ratio of 34 : 10 : 29 : 27, and the temperature of the coagulating bath was set to 50°C.

In this case, in order to increase the phase separation speed, it was considered to attempt to increase the TEG ratio and inhibit the change in the phase separation process. However, the HSP distance was so long in this case that the resin cannot be dissolved, and it was difficult to obtain a porous membrane.

In Table 3 are shown the manufacture conditions of Reference Example 1.

[Table 3]

| Parameter | | Example 1 | Example 2 | Comparative Example 1 | Reference Example 1 |
|---|---|---|---|---|---|
| Fractal dimension | Photographing condition 1 | 1.8558 | 1.8665 | 1.8799 | - |
| | Photographing condition 2 | 1.8424 | 1.8304 | 1.8552 | - |
| | Photographing condition 3 | 1.8666 | 1.8504 | 1.9402 | - |
| | Photographing condition 4 | 1.8706 | 1.8305 | 1.9223 | - |
| | Photographing condition 5 | 1.8517 | 1.8424 | 1.8251 | - |
| | Photographing condition 6 | 1.8352 | 1.8145 | 1.8436 | - |
| | max-min | 0.0354 | 0.0520 | 0.1151 | - |
| | CV value | 0.74% | 0.99% | 2.42% | - |
| Structure | | Three-dimensional network structure | Three-dimensional network structure | Three-dimensional network + spherulite structure | Membrane formation is impossible. |

(continued)

| Parameter | | Example 1 | Example 2 | Comparative Example 1 | Reference Example 1 |
|---|---|---|---|---|---|
| Composition | Thermoplastic resin | SOLEF 6010 | SOLEF 6010 | SOLEF 6010 | SOLEF 6010 |
| | Solvent | GBL | GBL | GBL | GBL |
| | Phase separation accelerator | TEG | Gly | TEG | TEG |
| | Filler | AEROSIL 50 | Finesil X-35 | AEROSIL 50 | AEROSIL 50 |
| Composition ratio (Mass ratio) | Thermoplastic resin | 34 | 32 | 34 | 34 |
| | Solvent | 21 | 34 | 28 | 10 |
| | Phase separation accelerator | 18 | 14 | 11 | 29 |
| | Filler | 27 | 20 | 27 | 27 |
| HSP distance between thermoplastic resin and a mixture of the solvent and the phase separation accelerator | | 4.03 | 5.89 | 3.71 | 6.62 |
| Film formation conditions | Membrane-forming stock solution temperature | 155 | 155 | 155 | 155 |
| | Coagulating liquid temperature | 85 | 70 | 50 | 50 |
| | Temperature difference ($\Delta T$) between membrane-forming stock solution temperature and coagulating liquid temperature | 70 | 85 | 105 | 105 |
| Test results | Water permeation performance (LMH) | 1029 | 26480 | 139 | - |
| | Nominal pore size ($\mu$m) | 0.02 | 2 | 0.02 | - |
| | Tensile strength at break (N/mm$^2$) | 9.42 | 8.91 | 7.89 | - |
| | Tensile elongation at break (%) | 65 | 58 | 14 | - |

(Discussion)

As is apparent from Table 3, the fractal dimensions calculated for the porous hollow fiber membranes of Examples 1 and 2 under a plurality of conditions including at least two or more conditions at a discretionary photographing position and magnification of a membrane section were all 1.5 or more and 1.9 or less, and the porous hollow fiber membranes were superior in balance among water permeability, strength, and elongation.

On the other hand, in the porous hollow fiber membrane of Comparative Example 1 can be confirmed that minute spherulite structures derived from the occurrence of a change in the phase separation process were generated particularly in the central portion of the porous structure, and the fractal dimension was calculated to be a high value only at that portion. As can be seen from Table 3, the water permeability, strength, and elongation were inferior to those of Examples 1 and 2.

This is considered as follows: when the HSP distance between the thermoplastic resin and the mixture of the solvent and the phase separation accelerator in the membrane-forming stock solution is less than 3.75, the phase separation speed is lowered and a spherulite structure is likely to be generated, so that a partial increase in fractal dimension is induced, whereby a porous membrane superior in balance among water permeability, strength, and elongation was not obtained.

That is further considered as follows: when the temperature difference between the temperature of the membrane-forming stock solution in the extrusion step and the temperature of the coagulating liquid in the formation step is more than 100°C, crystallization proceeds earlier than the proceeding of phase separation due to rapid cooling of the heated membrane-forming stock solution, and the phase structure is changed in the course of the phase separation process and a structure with a process change, such as a spherulite structure, is likely to be generated, so that a partial increase in fractal dimension is induced, whereby a porous membrane superior in balance among water permeability, strength, and elongation was not obtained.

<Test Example 2>

(Example 3)

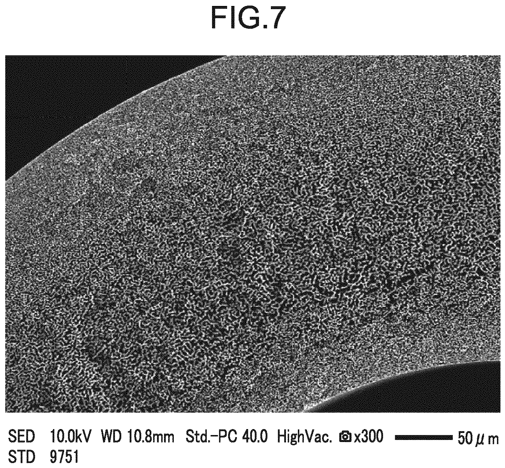

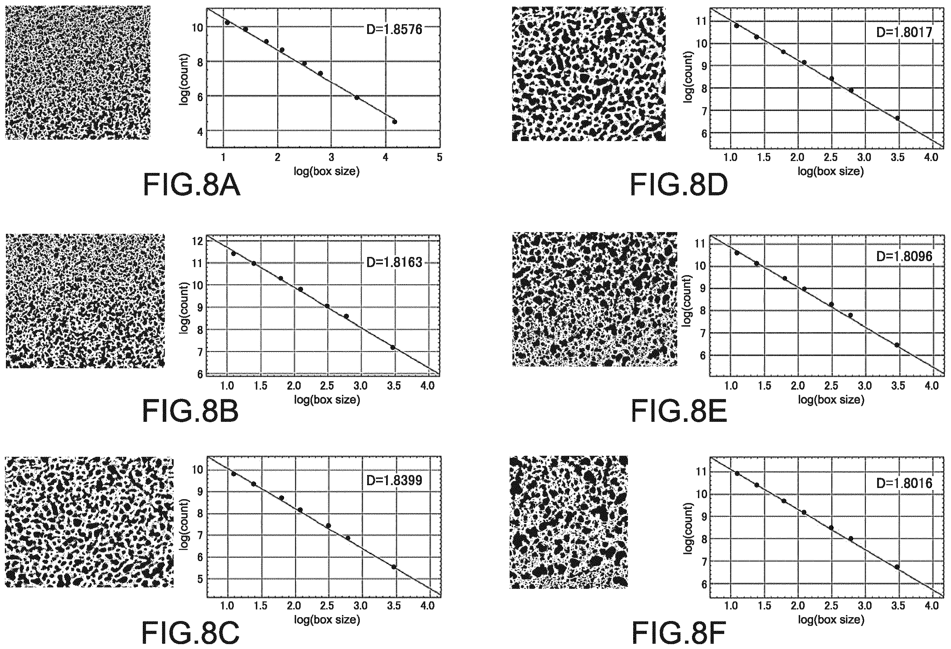

A membrane-forming stock solution was prepared such that polyvinylidene fluoride (Kynar 741 manufactured by Arkema S.A.) as a thermoplastic resin, γ-butyrolactone (GBL manufactured by Mitsubishi Chemical Corporation) as a solvent, and polyvinylpyrrolidone (Sokalan K 90 P manufactured by BASF Japan Ltd.) as a phase separation accelerator were present at a mass ratio of 25 : 65 : 10.
The mixture was dissolved in a dissolution tank at a constant temperature of 95°C and kneaded, affording a membrane-forming stock solution. The membrane-forming stock solution was extruded through a nozzle (hollow fiber membrane forming nozzle) having a double tube structure with an outer diameter of 1.6 mm and an inner diameter of 0.8 mm.
At this time, the membrane-forming stock solution was extruded such that the temperature (extrusion temperature) of the membrane-forming stock solution was 80°C. As an internal coagulating liquid, glycerin (Refined Glycerin manufactured by Kao Corporation) was extruded simultaneously with the membrane-forming stock solution.
The membrane-forming stock solution extruded was immersed in an external coagulating liquid composed of water at 80°C through an aerial travel distance of 3 cm. Thereby, the membrane-forming stock solution was coagulated, affording a hollow fiber membrane. Then, the hollow fiber material was heat-treated in water at 95°C for 120 minutes to perform extraction and removal of the solvent and the phase separation accelerator.
The hollow fiber membrane thus obtained had an outer diameter of 1.25 mm, an inner diameter of 0.75 mm, and a membrane thickness of 0.25 mm.
The sectional structure of the hollow fiber membrane according to Example 3 was observed with a scanning electron microscope (SEM) (JSM-IT200 manufactured by JEOL Ltd.). The result is shown in FIG. 7.
In addition, the sectional structure was observed using a scanning electron microscope (SEM) (JSM-IT200 manufactured by JEOL Ltd.) under six conditions represented by the photographing position and magnification given below. The results are shown in FIG. 8. (Photographing condition 1: sectional outer peripheral portion: 2000 magnifications (left diagram of FIG. 8A), photographing condition 2: sectional outer peripheral portion: 4000 magnifications (left diagram of FIG. 8B), photographing condition 3: sectional central portion: 1000 magnifications (left diagram of FIG. 8C), photographing condition 4: sectional central portion: 2000 magnifications (left diagram of FIG. 8D), photographing condition 5: sectional inner peripheral portion: 2000 magnifications (left diagram of FIG. 8E), photographing condition 6: sectional inner peripheral portion: 4000 magnifications (left diagram of FIG. 8F)
The photographs shown in the left diagrams of FIGS. 8A to 8F were binarized to distinguish a solid portion (resin portion) and a void portion constituting a porous structure in one division, and a fractal dimension was calculated for the binarized image using the Box Counting function of Image J (right diagrams of FIGS. 8A to 8F).
In Table 4, the blending composition, the manufacture conditions, various performances, and the calculated fractal dimension of the porous membrane obtained of Example 3 are shown.

(Example 4)

A mixture was prepared such that polysulfone (PSF) (Ultrason S3010 manufactured by BASF Japan Ltd.) as a thermoplastic resin, dimethylformamide (manufactured by Mitsubishi Gas Chemical Company, Inc.) as a solvent, and polyethylene glycol (PEG-600 manufactured by Sanyo Chemical Industries, Ltd.) as a phase separation accelerator were present at a mass ratio of 20 : 44 : 36. The mixture was dissolved in a dissolution tank at a constant temperature of 90°C. Thereafter, the temperature of the membrane-forming stock solution was lowered to 25°C, affording a membrane-forming stock solution.
The membrane-forming stock solution was extruded through a nozzle having a double tube structure with an outer diameter of 1.6 mm and an inner diameter of 0.8 mm. At this time, water as an internal coagulating liquid was discharged simultaneously with the membrane-forming stock solution. The membrane-forming stock solution extruded together with the internal coagulating liquid was introduced into an external coagulating liquid (temperature: 25°C) composed of water through an aerial travel distance of 3 cm, made to pass through a water bath and come into contact with a nonsolvent, and thereby coagulated. Subsequently, the hollow fiber material was heat-treated in water at 95°C for 120 minutes to perform extraction and removal of the solvent and the phase separation accelerator.
The hollow fiber membrane thus obtained had an outer diameter of 0.8 mm, an inner diameter of 0.5 mm, and a membrane thickness of 0.15 mm.

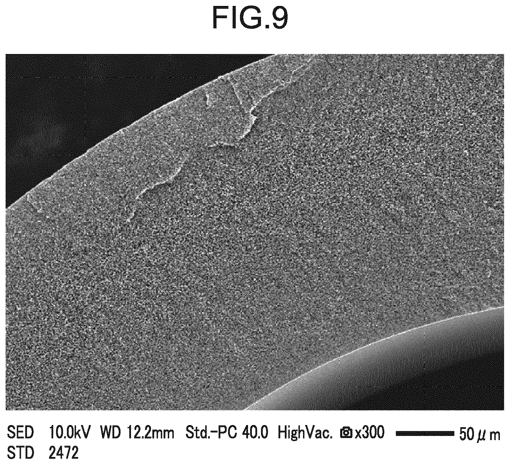

The sectional structure of the hollow fiber membrane according to Example 4 was observed with a scanning electron microscope (SEM) (JSM-IT200 manufactured by JEOL Ltd.). The result is shown in FIG. 9.

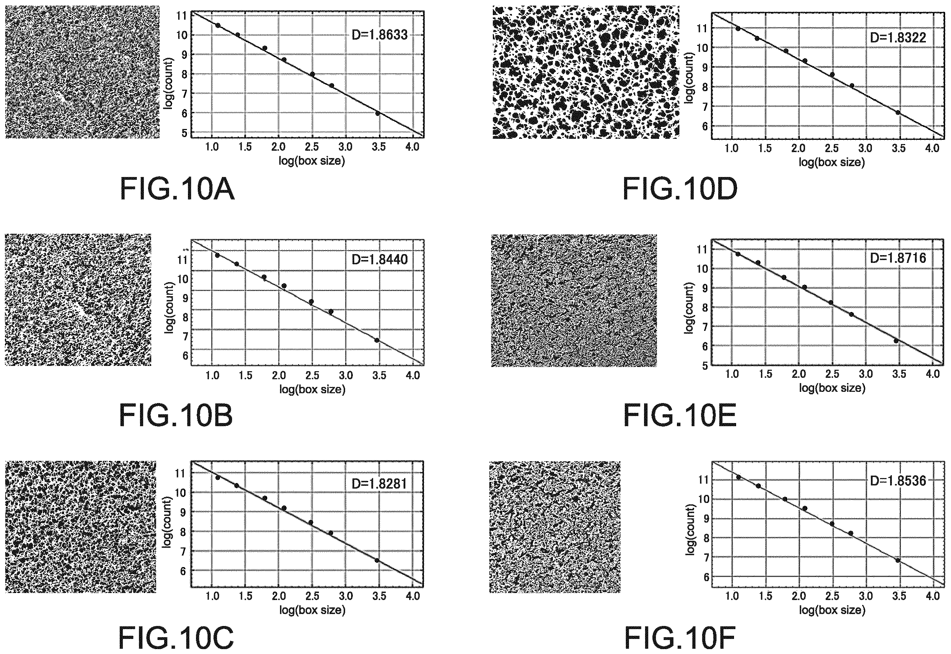

In addition, the sectional structure was observed using a scanning electron microscope (SEM) (JSM-IT200 manufactured by JEOL Ltd.) under six conditions represented by the photographing position and magnification given below. The results are shown in FIG. 10. (Photographing condition 1: sectional outer peripheral portion: 2000 magnifications (left diagram of FIG. 10A), photographing condition 2: sectional outer peripheral portion: 4000 magnifications (left diagram of FIG. 10B), photographing condition 3: sectional central portion: 2000 magnifications (left diagram of FIG. 10C), photographing condition 4: sectional central portion: 4000 magnifications (left diagram of FIG. 10D), photographing condition 5: sectional inner peripheral portion: 2000 magnifications (left diagram of FIG. 10E), photographing condition 6: sectional inner peripheral portion: 4000 magnifications (left diagram of FIG. 10F)

The photographs shown in the left diagrams of FIGS. 10A to 10F were binarized to distinguish a solid portion (resin portion) and a void portion constituting a porous structure in one division, and a fractal dimension was calculated for the binarized image using the Box Counting function of Image J (right diagrams of FIGS. 10A to 10F).

In Table 4, the blending composition, the manufacture conditions, various performances, and the calculated fractal dimension of the porous membrane obtained of Example 4 are shown.

(Comparative Example 2)

A membrane was formed in the same manner as in Example 3 except that a membrane-forming stock solution was prepared such that polyvinylidene fluoride (Kynar 741 manufactured by Arkema S.A.) as a thermoplastic resin, γ-butyrolactone (GBL manufactured by Mitsubishi Chemical Corporation) as a solvent, and polyethylene glycol (PEG-600 manufactured by Sanyo Chemical Industries, Ltd.) as a phase separation accelerator were present at a mass ratio of 25 : 65 : 10.

The hollow fiber membrane obtained had an outer diameter of 1.25 mm, an inner diameter of 0.75 mm, and a membrane thickness of 0.25 mm.

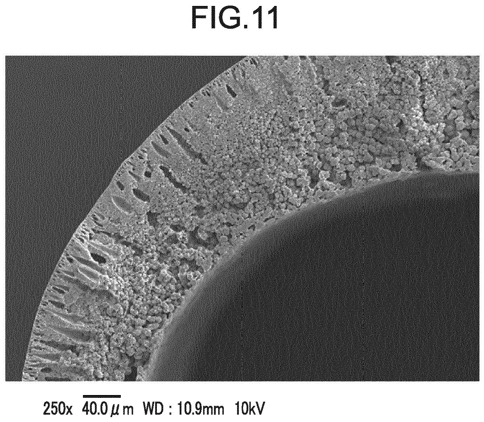

The sectional structure of the hollow fiber membrane according to Comparative Example 3 was observed with a scanning electron microscope (SEM) (JSM-IT200 manufactured by JEOL Ltd.). The result is shown in FIG. 11.

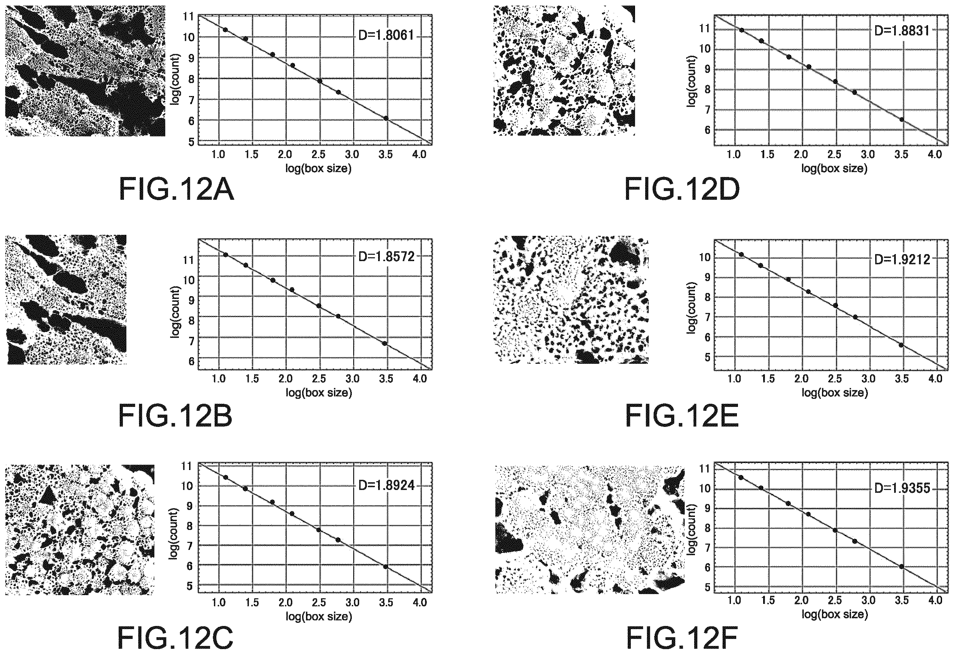

In addition, the sectional structure was observed using a scanning electron microscope (SEM) (JSM-IT200 manufactured by JEOL Ltd.) under six conditions represented by the photographing position and magnification given below. The results are shown in FIG. 12. (Photographing condition 1: sectional outer peripheral portion: 2000 magnifications (left diagram of FIG. 12A), photographing condition 2: sectional outer peripheral portion: 4000 magnifications (left diagram of FIG. 12B), photographing condition 3: sectional central portion: 2000 magnifications (left diagram of FIG. 12C), photographing condition 4: sectional central portion: 4000 magnifications (left diagram of FIG. 12D), photographing condition 5: sectional inner peripheral portion: 4000 magnifications (left diagram of FIG. 12E), photographing condition 6: sectional inner peripheral portion: 2000 magnifications (left diagram of FIG. 12F)

The photographs shown in the left diagrams of FIGS. 12A to 12F were binarized to distinguish a solid portion (resin portion) and a void portion constituting a porous structure in one division, and a fractal dimension was calculated for the binarized image using the Box Counting function of Image J (right diagrams of FIGS. 12A to 12F).

In Table 4, the blending composition, the manufacture conditions, various performances, and the calculated fractal dimension of the porous membrane obtained of Comparative Example 2 are shown.

[Table 4]

| Parameter | | Example 3 | Example 4 | Comparative Example 2 |
|---|---|---|---|---|
| Fractal dimension | Photographing condition 1 | 1.8576 | 1.8633 | 1.8061 |
| | Photographing condition 2 | 1.8163 | 1.844 | 1.8572 |
| | Photographing condition 3 | 1.8399 | 1.8281 | 1.8924 |
| | Photographing condition 4 | 1.8017 | 1.8322 | 1.8831 |
| | Photographing condition 5 | 1.8096 | 1.8716 | 1.9212 |
| | Photographing condition 6 | 1.8016 | 1.8536 | 1.9355 |
| | max-min | 0.0560 | 0.0435 | 0.1294 |
| | CV value | 1.25% | 0.93% | 2.48% |
| Structure | | Three-dimensional network structure | Three-dimensional network structure | Three-dimensional network + spherulite + macrovoid structure |
| Composition | Thermoplastic resin | Kynar 741 | Ultrason S3010 | Kynar 741 |
| | Solvent | GBL | DMF | GBL |
| | Phase separation accelerator | PVP | PEG 600 | PEG 600 |
| Composition ratio (Mass ratio) | Thermoplastic resin | 25 | 20 | 25 |
| | Solvent | 65 | 44 | 65 |
| | Phase separation accelerator | 10 | 36 | 10 |
| HSP distance between thermoplastic resin and a mixture of the solvent and the phase separation accelerator | | 5.46 | 6.69 | 4.85 |
| HSP distance between membrane-forming stock solution and coagulating liquid | | 33.8 | 33.1 | 34.9 |
| Test results | Water permeation performance (LMH) | 2300 | 750 | 122 |
| | Nominal pore size ($\mu$m) | 0.02 | 0.01 | Unmeasurable |
| | Tensile strength at break (N/mm$^2$) | 4.63 | 4.96 | 3.01 |
| | Tensile elongation at break (%) | 122 | 56 | 12 |

(Discussion)

As is apparent from Table 4, the fractal dimensions calculated for the porous hollow fiber membranes of Examples 3 and 4 under a plurality of conditions including at least two or more conditions at a discretionary photographing position and magnification of a membrane section were all 1.5 or more and 1.9 or less, and the porous hollow fiber membranes were superior in balance among water permeability, strength, and elongation.

On the other hand, in the porous hollow fiber membrane of Comparative Example 3, a macrovoid structure was generated in the outer peripheral portion of a membrane section, a spherulite structure was generated in the central portion, a structural change derived from the occurrence of a change in the phase separation process was observed, and it was confirmed that the fractal dimension greatly varied. As can be seen from Table 4, the water permeability, strength, and elongation were confirmed to be inferior to those of Examples 3 and 4.

This is considered as follows: when the HSP distance between the membrane-forming stock solution and the coagulating liquid is more than 34.2, the nonsolvent is rapidly taken in, and macrovoids or a spherulite structure is likely to be caused, so that the fractal dimension is not constant, whereby a porous membrane superior in balance among water permeability, strength, and elongation was not obtained.

This application is based on Japanese Patent Application No. 2021-177826 filed on October 29, 2021, the contents of which are included in the present application.

In order to embody the present invention, the present invention has been appropriately and sufficiently described through the embodiments with reference to the specific examples and the drawings in the above, but it should be recognized that those skilled in the art can easily modify and/or improve the above-described embodiments. Therefore, as long as modifications or improvements carried out by a person skilled in the art do not depart from the scope of the claims described in the patent claims, these modifications or improvements are interpreted as being encompassed by the scope of the claims.

**Industrial Applicability**

The present invention has wide industrial applicability in technical fields such as water treatment fields such as water purification, drinking water production, industrial water production, and wastewater treatment, food industry fields, and pharmaceutical product production fields.

**Claims**

**1.** porous membrane having a porous structure, wherein

when a fractal dimension is calculated under a plurality of conditions including at least two or more conditions, the fractal dimension being to be calculated from image data obtained by photographing a porous structure on a cut section formed by cutting the porous membrane on a discretionary section in which at least the porous structure is observed,
at a discretionary photographing position and a discretionary photographing magnification at which at least the porous structure of the membrane section is observed,
all of the fractal dimensions calculated under each of the plurality of conditions are 1.5 or more and 1.9 or less.

**2.** The porous membrane according to claim 1, wherein

when a fractal dimension to be calculated from the image data obtained by photographing the porous structure is calculated under a plurality of conditions including at least two or more conditions,
a difference between a maximum value and a minimum value of the fractal dimensions calculated under each of the plurality of conditions is 0.1 or less.

**3.** The porous membrane according to claim 1 or 2, wherein

when a fractal dimension to be calculated from the image data obtained by photographing the porous structure is calculated under a plurality of conditions including at least six or more conditions,
a CV value of the fractal dimensions calculated under each of the plurality of conditions is 0.1% or more and 2.0% or less.

**4.** The porous membrane according to any one of claims 1 to 3, wherein the porous membrane contains a thermoplastic resin.

5. The porous membrane according to any one of claims 1 to 4, wherein a structure of the porous membrane is a three-dimensional network structure.

6. The porous membrane according to any one of claims 1 to 5, wherein the porous membrane is in a hollow fiber form.

7. The porous membrane according to any one of claims 1 to 6, wherein the porous membrane has a tensile strength at break of 8.0 N/mm$^2$ or more and 15.0 N/mm$^2$ or less.

8. The porous membrane according to any one of claims 1 to 6, wherein the porous membrane has a tensile strength at break of 3.2 N/mm$^2$ or more and 6.5 N/mm$^2$ or less.

9. method for manufacturing the porous membrane according to claim 7, the method comprising:

a preparation step of preparing a membrane-forming stock solution containing a thermoplastic resin, a filler, a solvent, and a phase separation accelerator;
an extrusion step of extruding the membrane-forming stock solution at a temperature higher than a phase separation onset temperature at which phase separation of the membrane-forming stock solution starts due to a temperature change; and
a formation step of forming a porous membrane on a basis of a thermally induced phase separation method in which the extruded membrane-forming stock solution is brought into contact with a coagulating liquid having a temperature lower than the phase separation onset temperature of the membrane-forming stock solution,
wherein an HSP distance between the thermoplastic resin and a mixture of the solvent and the phase separation accelerator in the membrane-forming stock solution is 3.75 or more and 6.50 or less, and
a temperature difference between the temperature of the membrane-forming stock solution in the extrusion step and the temperature of the coagulating liquid in the formation step is 55°C or more and 100°C or less.

10. A method for manufacturing the porous membrane according to claim 8, the method comprising:

a preparation step of preparing a membrane-forming stock solution containing a thermoplastic resin, a solvent, and a phase separation accelerator;
an extrusion step of extruding the membrane-forming stock solution; and
a formation step of forming a porous membrane on the basis of a nonsolvent induced phase separation method in which the extruded membrane-forming stock solution is brought into contact with a coagulating liquid containing at least a nonsolvent,
wherein an HSP distance between the thermoplastic resin and a mixture of the solvent and the phase separation accelerator in the membrane-forming stock solution is 4.85 or more and 7.50 or less, and
an HSP distance between the membrane-forming stock solution and the coagulating liquid is 30 or more and 34.2 or less.

# FIG.1

300x  33.3 $\mu$ m  WD : 11.5mm  10kV

FIG.2A

FIG.2B

FIG.2C

FIG.2D

FIG.2E

FIG.2F

FIG.3

300x $\overline{33.3\,\mu\mathrm{m}}$ WD : 11.3mm 10kV

FIG.4A

FIG.4B

FIG.4C

FIG.4D

FIG.4E

FIG.4F

# FIG.5

300x 33.3 μm  WD : 11.3mm  10kV

FIG.6A

FIG.6B

FIG.6C

FIG.6D

FIG.6E

FIG.6F

# FIG.7

SED 10.0kV WD 10.8mm Std.-PC 40.0 HighVac. ⬚x300 ▬▬▬ 50μm
STD 9751

FIG.8A

FIG.8B

FIG.8C

FIG.8D

FIG.8E

FIG.8F

EP 4 414 059 A1

## FIG.9

SED  10.0kV  WD 12.2mm  Std.-PC 40.0  HighVac. ⊚x300 ━━━━━ 50$\mu$m
STD  2472

FIG.10A

FIG.10B

FIG.10C

FIG.10D

FIG.10E

FIG.10F

EP 4 414 059 A1

# FIG.11

250x $\overline{40.0\,\mu\,m}$ WD : 10.9mm 10kV

FIG.12A

FIG.12B

FIG.12C

FIG.12D

FIG.12E

FIG.12F

EP 4 414 059 A1

## INTERNATIONAL SEARCH REPORT

| | |
|---|---|
| | International application No. |
| | **PCT/JP2022/039686** |

**A. CLASSIFICATION OF SUBJECT MATTER**

***B01D 69/00***(2006.01)i; ***B01D 69/02***(2006.01)i; ***B01D 69/08***(2006.01)i; ***C08J 9/26***(2006.01)i
FI:    B01D69/00; B01D69/02; B01D69/08; C08J9/26 CEZ

According to International Patent Classification (IPC) or to both national classification and IPC

**B. FIELDS SEARCHED**

Minimum documentation searched (classification system followed by classification symbols)

B01D69/00; B01D69/02; B01D69/08; C08J9/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-227932 A (ASAHI KASEI CHEMICALS CORP) 14 October 2010 (2010-10-14)<br>claims, paragraphs [0044], [0100], table 2 | 1-8 |
| A | WO 99/15252 A1 (HITACHI, LTD) 01 April 1999 (1999-04-01)<br>entire text, all drawings | 1-10 |
| A | JP 2002-166141 A (MITSUBISHI RAYON CO LTD) 11 June 2002 (2002-06-11)<br>entire text, all drawings | 1-10 |
| A | JP 2016-196004 A (MITSUBISHI RAYON CO LTD) 24 November 2016 (2016-11-24)<br>entire text, all drawings | 1-10 |
| A | WO 2018/088232 A1 (ASAHI KASEI KABUSHIKI KAISHA) 17 May 2018 (2018-05-17)<br>entire text, all drawings | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/039686**

| Patent document cited in search report | | | Publication date (day/month/year) | Patent family member(s) | | | Publication date (day/month/year) |
|---|---|---|---|---|---|---|---|
| JP | 2010-227932 | A | 14 October 2010 | US | 2009/0297822 | A1 | |
| | | | | claims, paragraphs [0098]-[0155], table 2 | | | |
| | | | | WO | 2007/043553 | A1 | |
| | | | | EP | 1935480 | A1 | |
| | | | | CN | 101282780 | A | |
| | | | | KR | 10-2008-0045275 | A | |
| WO | 99/15252 | A1 | 01 April 1999 | (Family: none) | | | |
| JP | 2002-166141 | A | 11 June 2002 | US | 2002/0046970 | A1 | |
| | | | | WO | 2002/024315 | A1 | |
| | | | | CN | 1458858 | A | |
| | | | | KR | 10-2003-0059145 | A | |
| JP | 2016-196004 | A | 24 November 2016 | KR | 10-2016-0044582 | A | |
| | | | | CN | 105722585 | A | |
| WO | 2018/088232 | A1 | 17 May 2018 | US | 2019/0314767 | A1 | |
| | | | | KR | 10-2019-0045361 | A | |
| | | | | CN | 109922875 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6757739 B
- WO 2007119850 A
- JP 6824284 B
- JP 2021177826 A

**Non-patent literature cited in the description**

- **HANSEN C.M.** Hansen Solubility Parameters: A User's Handbook. CRC Press, 2007
- **ALLAN F.M. BARTON.** CRC Handbook of solubility parameters and other cohesion parameters. CRC Corp, 1991
- **MOHSENPOUR S ; SAFEKORDI A ; TAVAKOL-MOGHADAM M ; REKABDAR F ; HEMMATI M.** *Polymer,* 2016, vol. 97, 559-568
- **ZHOU Z ; FANG L ; CAO Y ; WANG W ; WANG J ; YANG Y ; LIU Y.** *Colloids and Surfaces A,* 2020, vol. 601, 125031
- *Journal of membrane Science,* 2017, vol. 532, 47-57